# EUROPEAN PATENT APPLICATION

(11) **EP 4 852 580 A1**
(43) Date of publication of application: **09.12.2026**
(21) Application number: 25747948.5
(22) Date of filing: 26.01.2025
(51) Int. Cl.: H04W 72/21

(54) **COMMUNICATION OPERATION EXECUTION METHOD AND APPARATUS, INFORMATION RECEIVING METHOD AND APPARATUS, AND RELATED DEVICE**

(30) Priority: 30.01.2024 CN 202410128616
(71) Applicant: Vivo Mobile Communication Co., Ltd., Dongguan, Guangdong 523863 (CN)
(72) Inventor: LIU, Siqi, Dongguan, Guangdong 523863 (CN); WANG, Yong, Dongguan, Guangdong 523863 (CN); ZHENG, Kaili, Dongguan, Guangdong 523863 (CN); MO, Yitao, Dongguan, Guangdong 523863 (CN)
(74) Representative: Walaski, Jan Filip
(86) International application number: PCT/CN2025/075207
(87) International publication number: WO 2025/162384

(57) **Abstract**

This application discloses a communication operation execution method and apparatus, an information receiving method and apparatus, and a related device, pertaining to the field of communications technologies. The communication operation execution method in embodiments of this application includes: performing, by a terminal, a first operation, where the first operation includes at least one of the following: the terminal determines, based on first information, a transmission manner of a first uplink transmission; the terminal determines, based on information included in the first uplink transmission, the transmission manner of the first uplink transmission; the terminal determines, based on a target condition, the transmission manner of the first uplink transmission; and the terminal performs transmission of the first uplink transmission using a first transmission manner; where the first transmission manner is uplink transmission based on an orthogonal cover code OCC sequence, the first transmission manner is one of transmission manners of the first uplink transmission, and the first information is used for determining an OCC sequence.

## Description

### CROSS-REFERENCE TO RELATED APPLICATIONS

The present disclosure claims priority to Chinese Patent Application No. 202410128616.0, filed with the China National Intellectual Property Administration on January 30, 2024 and entitled "COMMUNICATION OPERATION EXECUTION METHOD AND APPARATUS, INFORMATION RECEIVING METHOD AND APPARATUS, AND RELATED DEVICE", which is incorporated herein by reference in its entirety.

### TECHNICAL FIELD

This application pertains to the field of communications technologies, and specifically, relates to a communication operation execution method and apparatus, an information receiving method and apparatus, and a related device.

### BACKGROUND

In a mobile communication system, due to a large communication coverage area and a large number of terminals accessing a network, a transmission manner of uplink transmission for the terminals accessing the network is to directly map to-be-transmitted information to transmission resources for transmission, which results in relatively poor uplink transmission performance.

### SUMMARY

Embodiments of this application provide a communication operation execution method and apparatus, an information receiving method and apparatus, and a related device, which can resolve the problem of relatively poor uplink transmission performance.

According to a first aspect, a communication operation execution method is provided, including:
performing, by a terminal, a first operation, where
the first operation includes at least one of the following:
   the terminal determines, based on first information, a transmission manner of a first uplink transmission;
   the terminal determines, based on information included in the first uplink transmission, the transmission manner of the first uplink transmission;
   the terminal determines, based on a target condition, the transmission manner of the first uplink transmission; and
   the terminal performs transmission of the first uplink transmission using a first transmission manner; where
   the first transmission manner is uplink transmission based on an orthogonal cover code OCC sequence, the first transmission manner is one of transmission manners of the first uplink transmission, and the first information is used for determining an OCC sequence.

According to a second aspect, an information receiving method is provided, including:
receiving, by a network-side device, first indication information reported by a terminal, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

According to a third aspect, a communication operation execution apparatus is provided, where a terminal includes the communication operation execution apparatus and the apparatus includes:
an execution module, configured to perform a first operation, where
the first operation includes at least one of the following:
   the terminal determines, based on first information, a transmission manner of a first uplink transmission;
   the terminal determines, based on information included in the first uplink transmission, the transmission manner of the first uplink transmission;
   the terminal determines, based on a target condition, the transmission manner of the first uplink transmission; and
   the terminal performs transmission of the first uplink transmission using a first transmission manner; where
   the first transmission manner is uplink transmission based on an orthogonal cover code OCC sequence, the first transmission manner is one of transmission manners of the first uplink transmission, and the first information is used for determining an OCC sequence.

According to a fourth aspect, an information receiving apparatus is provided, where a network-side device includes the information receiving apparatus, and the apparatus includes:
a first receiving module, configured to receive first indication information reported by a terminal, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

According to a fifth aspect, a terminal is provided, where the terminal includes a processor and a memory, where a program or instructions capable of running on the processor are stored in the memory. When the program or the instructions are executed by the processor, the steps of the method according to the first aspect are implemented.

According to a sixth aspect, a terminal is provided, including a processor and a communication interface, where the processor is configured to:
perform a first operation, where
the first operation includes at least one of the following:
   the terminal determines, based on first information, a transmission manner of a first uplink transmission;
   the terminal determines, based on information included in the first uplink transmission, the transmission manner of the first uplink transmission;
   the terminal determines, based on a target condition, the transmission manner of the first uplink transmission; and
   the terminal performs transmission of the first uplink transmission using a first transmission manner; where
   the first transmission manner is uplink transmission based on an orthogonal cover code OCC sequence, the first transmission manner is one of transmission manners of the first uplink transmission, and the first information is used for determining an OCC sequence.

According to a seventh aspect, a network-side device is provided, where the network-side device includes a processor and a memory, where a program or instructions capable of running on the processor are stored in the memory. When the program or the instructions are executed by the processor, the steps of the method according to the second aspect are implemented.

According to an eighth aspect, a network-side device is provided and includes a processor and a communication interface, where the communication interface is configured to:
receive first indication information reported by a terminal, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

According to a ninth aspect, a communication operation execution system is provided, including a terminal and a network-side device, where the terminal can be configured to execute the steps of the method according to the first aspect; and the network-side device can be configured to execute the steps of the method according to the second aspect.

According to a tenth aspect, a readable storage medium is provided, where a program or instructions are stored in the readable storage medium, and in a case that the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or the method according to the second aspect.

According to a twelfth aspect, a computer program/program product is provided, where the computer program/program product is stored in a storage medium, and the computer program/program product is executed by at least one processor to implement the steps of the method according to the first aspect, or the steps of the method according to the second aspect.

In embodiments of this application, the terminal determines a transmission manner of a first uplink transmission based on first information; or the terminal determines, based on information included in the first uplink transmission, the transmission manner of the first uplink transmission; or the terminal determines, based on a target condition, the transmission manner of the first uplink transmission. In this way, determining the transmission manner of the first uplink transmission based on the first information, the information included in the first uplink transmission, or the target condition can improve the flexibility of determining the transmission manner, thereby improving the uplink transmission performance; or, the terminal performs transmission of the first uplink transmission using the first transmission manner, where the first transmission manner is uplink transmission based on an orthogonal cover code OCC sequence, and the OCC sequence can implement multiplexing of transmission resources, which can improve the utilization rate of transmission resources, thereby improving the uplink transmission performance.

### BRIEF DESCRIPTION OF DRAWINGS

FIG. 1 is a block diagram of a wireless communication system to which embodiments of this application are applicable;
FIG. 2a is a first schematic diagram of a transmission transformation provided by the related art;
FIG. 2b is a second schematic diagram of a transmission transformation provided by the related art;
FIG. 2c is a third schematic diagram of a transmission transformation provided by the related art;
FIG. 2d is a fourth schematic diagram of a transmission transformation provided by the related art;
FIG. 3 is a schematic diagram of a TBS provided in the related art;
FIG. 4 is a flowchart of a communication operation execution method according to an embodiment of this application;
FIG. 5 is a flowchart of an information receiving method according to an embodiment of this application;
FIG. 6a is a first schematic diagram of a transmission transformation according to an embodiment of this application;
FIG. 6b is a second schematic diagram of a transmission transformation according to an embodiment of this application;
FIG. 6c is a third schematic diagram of a transmission transformation according to an embodiment of this application;
FIG. 6d is a fourth schematic diagram of a transmission transformation according to an embodiment of this application;
FIG. 6e is a fifth schematic diagram of a transmission transformation according to an embodiment of this application;
FIG. 7 is a schematic structural diagram of a communication operation execution apparatus according to an embodiment of this application;
FIG. 8 is a schematic structural diagram of an information receiving apparatus according to an embodiment of this application; and
FIG. 9 is a schematic structural diagram of a communication device according to an embodiment of this application;
FIG. 10 is a schematic structural diagram of a terminal according to an embodiment of this application; and
FIG. 11 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

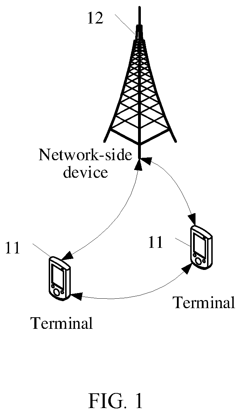

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart bangle, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited.

For ease of understanding, the following describes some content involved in the embodiments of this application:

### 1. NTN

A non-terrestrial network (Non-Terrestrial Network, NTN) can enhance uplink capacity (uplink capacity enhancement), for example, by enhancing DFT-s-OFDM PUSCH through orthogonal cover codes (OCC) to improve capacity or throughput. In addition, some factors (such as Doppler, time variation, or phase distortion) under actual deployment conditions also need to be considered to achieve the goal of capacity improvement.

### 2. Block-wise spreading

In order to improve a multiplexing capability of user equipment (User Equipment, UE, that is, terminal) and thus increase system capacity, a block-wise spreading transmission method based on OCC (orthogonal cover code, orthogonal cover code) has been introduced in PUCCH transmission.

The block-wise spreading scheme is as follows:
For PUCCH format 3 with interlaced mapping and PUCCH format 4, block-wise spreading shall be applied according to (For PUCCH format 3 with interlaced mapping and PUCCH format 4, block-wise spreading shall be applied according to): $y \left({lM}_{sc}^{PUCCH , s}+k\right) = {w}_{n} \left(\left⌊k\frac{{N}_{SF}^{PUCCH , s}}{{M}_{sc}^{PUCCH , s}}\right⌋\right) d \left(l\frac{{M}_{sc}^{PUCCH , s}}{{N}_{SF}^{PUCCH , s}}+k mod \frac{{M}_{sc}^{PUCCH , s}}{{N}_{SF}^{PUCCH , s}}\right)$ $k = 0 , 1 , … , {M}_{sc}^{PUCCH , s} - 1$ $l = 0 , 1 , … , \left({N}_{SF}^{PUCCH , s}{M}_{symb}/{M}_{sc}^{PUCCH , s}\right) - 1$ where (where)
for PUCCH format 3 with interlaced mapping, ${N}_{SF}^{PUCCH , 3} ∈ \left\{1, 2, 4\right\}$ if a single interlace is configured and ${N}_{SF}^{PUCCH , 3} = 1$, *wₙ* = 1 if two interlaces are configured (for PUCCH format 3 with interlaced mapping, ${N}_{SF}^{PUCCH , 3} ∈ \left\{1, 2, 4\right\}$ if a single interlace is configured and ${N}_{SF}^{PUCCH , 3} = 1$, *wₙ* = 1 if two interlaces are configured);
for PUCCH format 4, ${M}_{RB}^{PUCCH , 4}$ is given by clause 9.2.1 of [5, TS 38.213], and ${N}_{SF}^{PUCCH , 4} ∈ \left\{2, 4\right\}$ is given by the higher-layer parameter occ-Length (for PUCCH format 4, ${M}_{RB}^{PUCCH , 4}$ is given by clause 9.2.1 of [5, TS 38.213] and ${N}_{SF}^{PUCCH , 4} ∈ \left\{2, 4\right\}$ is given by the higher-layer parameter occ Length); and
*wₙ* is given by Tables 6.3.2.6.3-1 and 6.3.2.6.3-2 for ${N}_{SF}^{PUCCH , s} > 1$, where N is the index of the orthogonal sequence to use according to clause 9.2.1 of [5, TS 38.213]. The quantity ${N}_{SF}^{PUCCH , 3} ∈ \left\{2, 4\right\}$ is given by the higher-layer parameter occ-Length (if provided), otherwise ${N}_{SF}^{PUCCH , 3} = 1$ (and *wₙ* is given by Tables 6.3.2.6.3-1 and 6.3.2.6.3-2 for ${N}_{SF}^{PUCCH , s} > 1$ where n is the index of the orthogonal sequence to use according to clause 9.2.1 of [5, TS 38.213]. The quantity ${N}_{SF}^{PUCCH , 3} ∈ \left\{2, 4\right\}$ is given by the higher-layer parameter occ-Length if provided, otherwise ${N}_{SF}^{PUCCH , 3} = 1$).

Orthogonal sequences *wₙ*(*m*) for PUCCH format 3 with interlaced mapping and PUCCH format 4 when ${N}_{SF}^{PUCCH , s} = 2$ (Orthogonal sequences *wₙ*(*m*) for PUCCH format 3 with interlaced mapping and PUCCH format 4 when ${N}_{SF}^{PUCCH , s} = 2$ ), as shown in the following table:

| *n* | *wₙ* |
|---|---|
| 0 | [+1 +1] |
| 1 | [+1 -1] |

Orthogonal sequences *wₙ*(*m*) for PUCCH format 3 with interlaced mapping and PUCCH format 4 when ${N}_{SF}^{PUCCH , s} = 4$ (Orthogonal sequences *wₙ*(*m*) for PUCCH format 3 with interlaced mapping and PUCCH format 4 when ${N}_{SF}^{PUCCH , s} = 4$ ), as shown in the following table:

| *n* | *wₙ* |
|---|---|
| 0 | [+1 +1 +1 +1] |
| 1 | [+1 -*j* -1 + *j*] |
| 2 | [+1 -1 +1 -1] |
| 3 | [+1 *+j* -1 *-j*] |

For PUCCH format 3, block-wise spreading transmission is supported only in the case of interlace mapping, and 1/2/4 user multiplexing is supported only when a single interlace is configured;
For PUCCH format 4, 2/4 user multiplexing is supported, configured by the higher-layer parameter occ-Length.

From the above formula, it can be seen that:
(1) Addition of block-wise spreading is reflected in frequency domain, and the OCC sequence (w_n) multiplied on each symbol in time domain is the same.
(2) From $k mod \frac{{M}_{sc}^{PUCCH , s}}{{N}_{SF}^{PUCCH , s}}$, it can be seen that these continuous subcarriers in frequency domain satisfying $k mod \frac{{M}_{sc}^{PUCCH , s}}{{N}_{SF}^{PUCCH , s}} = 0 , … , k mod \frac{{M}_{sc}^{PUCCH , s}}{{N}_{SF}^{PUCCH , s}} = \frac{{M}_{sc}^{PUCCH , s}}{{N}_{SF}^{PUCCH , s}} - 1$ are multiplied by the same ${w}_{n} \left(\left⌊k\frac{{N}_{SF}^{PUCCH , s}}{{M}_{sc}^{PUCCH , s}}\right⌋\right)$, which means that these continuous subcarriers can be considered as one block.
(3) The above blocks are divided by the total number of subcarriers corresponding to a transmission bandwidth allocated to an uplink channel, that is, the number of blocks is equal to the total number of subcarriers divided by the number of multiplexed users.
(4) The maximum number of multiplexed users is 4.
(5) Only users allocated a same RB can be multiplexed together.

In addition, the principle of block-wise spreading can be learned through the following process:
For 2 UE multiplexing, UE 0 and UE 1 are (To 2 UE multiplexing, for UE 0 and UE 1 are): ${S}_{0} = {a}_{0} , {a}_{1} , … , {a}_{59} , {a}_{0} , {a}_{1} , … , {a}_{59} ;$ and (and) ${S}_{1} = {b}_{0} , {b}_{1} , … , {b}_{59} , - {b}_{0} , - {b}_{1} , … , - {b}_{59} .$

Based on the FFT property, it is straightforward to see that DFT(S₀) is non zero on even tones only, while *DFT*(*S*₁) is non zero on odd tones only. The detailed derivation is given below (Based on the FFT property, it is straightforward to see that DFT(S₀) is non zero on even tones only, while DFT(S₁) is non zero on odd tones only. The detailed derivation is given below):
Given a discrete time signal xₙ where n = 0, ..., N - 1, the FFT of xₙ is given by (Given a discrete time signal xₙ where n = 0, ..., N - 1, the FFT of xₙ is given by) the following formula: ${X}_{k} = {\sum }_{n = 0}^{N - 1} {x}_{n} {e}^{- j \frac{2 πkn}{N}} , k = 0 , … , N - 1 .$

Now, if *xₙ* = *x*_{*n*+*N*/2}, as in the signal from UE 0 (Now, if xₙ = x_{n+N/2}, as in the signal from UE 0), $\begin{matrix}{X}_{k} = {\sum }_{n = 0}^{\frac{N}{2} - 1} {x}_{n} {e}^{- j \frac{2 πkn}{N}} + {\sum }_{n = 0}^{\frac{N}{2} - 1} {x}_{n} {e}^{- j \frac{2 πk \left(n+\frac{N}{2}\right)}{N}} \\ = {\sum }_{n = 0}^{\frac{N}{2} - 1} {x}_{n} {e}^{- j \frac{2 πkn}{N}} + {\left(-1\right)}^{k} {\sum }_{n = 0}^{\frac{N}{2} - 1} {x}_{n} {e}^{- j \frac{2 πkn}{N}} .\end{matrix}$

Obviously, when k is odd (Obviously, when k is odd), *Xₖ* = 0.

Similarly, if xₙ = -x_{n+N/2}, as in the signal from UE 1 (Similarly, if xₙ = -x_{n+N/2}, as in the signal from UE 1), ${X}_{k} = {\sum }_{n = 0}^{\frac{N}{2} - 1} {x}_{n} {e}^{- j \frac{2 πkn}{N}} + {\left(-1\right)}^{k + 1} {\sum }_{n = 0}^{\frac{N}{2} - 1} {x}_{n} {e}^{- j \frac{2 πkn}{N}} .$

Therefore, in this case, when k is even (Therefore, in this case, when k is even), *Xₖ* = 0.

Based on the above analysis, we can conclude that the pre-DFT-OCC user multiplexing is equivalent to the comb-based user multiplexing (Based on the above analysis, we can conclude that the pre-DFT-OCC user multiplexing is equivalent to the comb-based user multiplexing).

To multiplex 4 UEs, the Fourier basis can be used for the OCC spreading code: [1,1,1,1], [1, j, -1, -j], [1, -1, 1, -1], [1, -j, -1, j]. Then, following the same proof as above, it can be shown that UEs are FDM-ed on every 4th REs and therefore the orthogonality between UEs still holds regardless of the delay spread of the channel. Thus, for OCC, pre-DFT OCC as in NR PUCCH Format 4 can be used (To multiplex 4 UEs, the Fourier basis can be used for the OCC spreading code: [1,1,1,1], [1, j, -1, -j], [1, -1, 1, -1], [1, -j, -1, j]. Then, following the same proof as above, it can be shown that UEs are FDM-ed on every 4 REs and therefore the orthogonality between UEs still holds regardless of the delay spread of the channel. Thus, for OCC, pre-DFT OCC as in NR PUCCH Format 4 can be used).

From the above principle introduction, it can be seen that for block-wise spreading, after different UEs multiply different OCC sequences, and then utilize characteristics of FFT transformation, different UEs, after pre-DFT transformation, occupy different REs during frequency domain mapping, for example, UE0 occupies odd REs, and UE1 occupies even REs, thereby achieving the effect of comb mapping and realizing multi-user multiplexing.

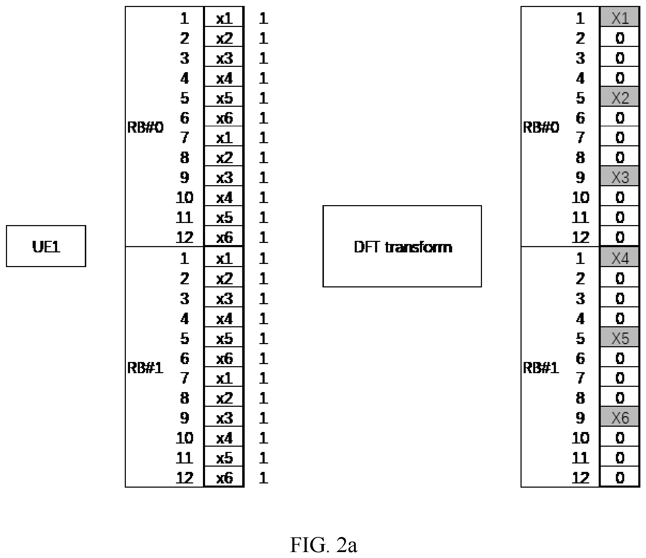

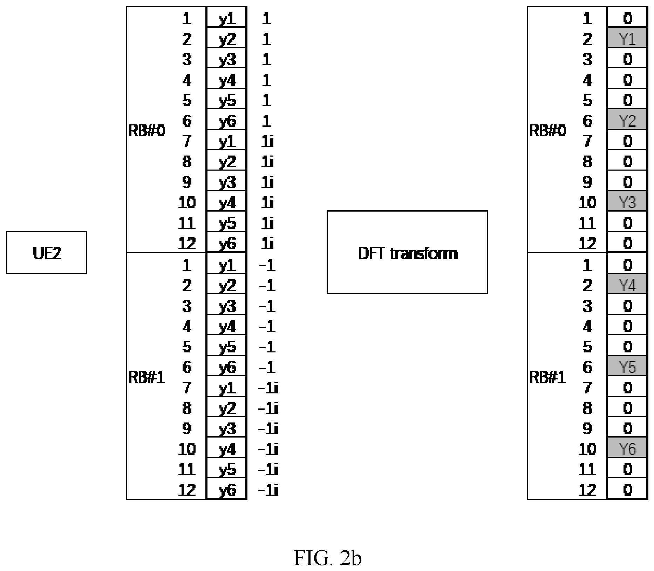

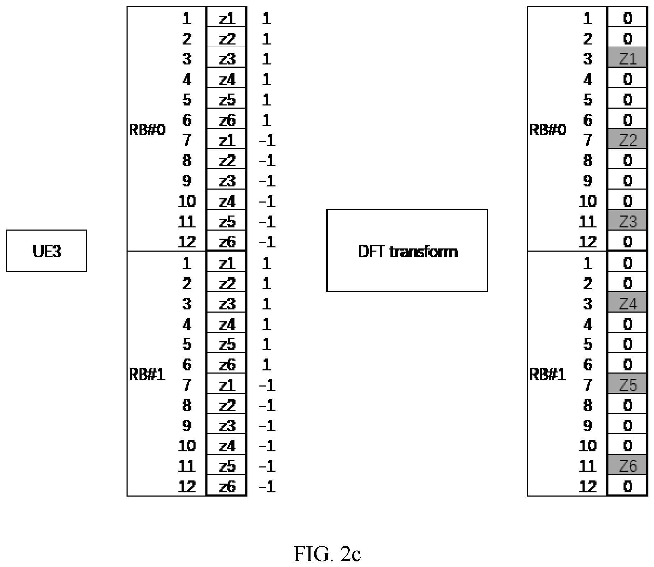

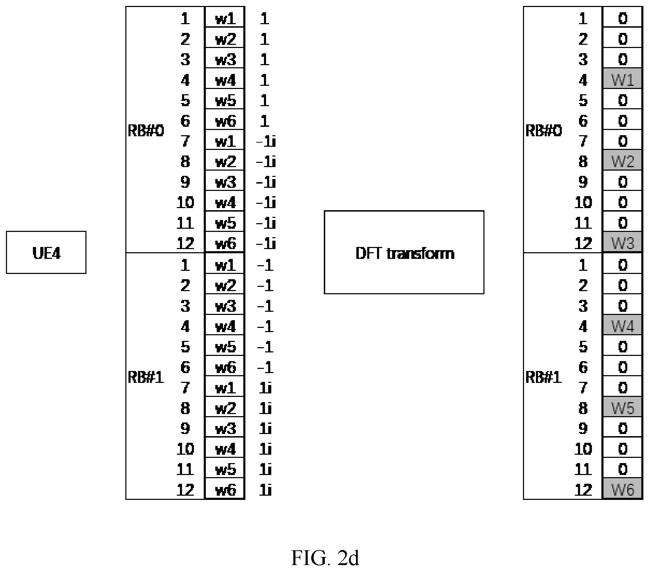

An example of the block-wise spreading scheme is as follows:
Assuming 4 users are multiplexed, and each user is allocated a bandwidth of 2 RBs, the changes before and after pre-DFT are shown in FIGs. 2a, 2b, 2c, and 2d.

### 3. Determining of TBS

The TBS of PUSCH is calculated based on the following parameters:
available resources: the number of allocated time domain symbols, and the number of allocated frequency domain PRBs;
modulation order *Qₘ* corresponding to MCS level, and target code rate R; and
the number *υ* of layers.

The TBS calculation process is as follows:
Step 1: Calculate the number of available Res.
   (1) Calculate the number of available REs within one PRB: ${N}_{RE ′} = {N}_{SC}^{RB} ⋅ {N}_{symb}^{sh} - {N}_{DMRS}^{PRB} - {N}_{oh}^{PRB}$ , where ${N}_{sc}^{RB} = 12$ indicates that one PRB in frequency domain contains 12 subcarriers; ${N}_{symb}^{sh}$ is the number of PUSCH symbols scheduled in one slot; ${N}_{DMRS}^{PRB}$ is the overhead of DMRS in one PRB; ${N}_{oh}^{PRB}$ is configured by the xOverhead field in the higher-layer parameter PUSCH-ServingCellConfig, considering the overhead of CSI-RS, CORESET, and the like, a default value is 0, and configurable values are {6,12,18}. For Msg3 PUSCH transmission, and ${N}_{oh}^{PRB}$ is set to 0.
   (2) Calculate the total number of available REs for the configured PUSCH transmission: ${N}_{RE} = min \left(156, {N}_{RE}^{′}\right) ⋅ {n}_{PRB}$, where *n_{PRB}* is the number of PRBs allocated to the UE.
Step 2: Calculate the number of intermediate information bits: *N_{info} = N_{RE}·R·Qₘ·υ.*

When *N_{info}* ≤ 3824, step 3 is performed;
Otherwise, step 4 is performed.

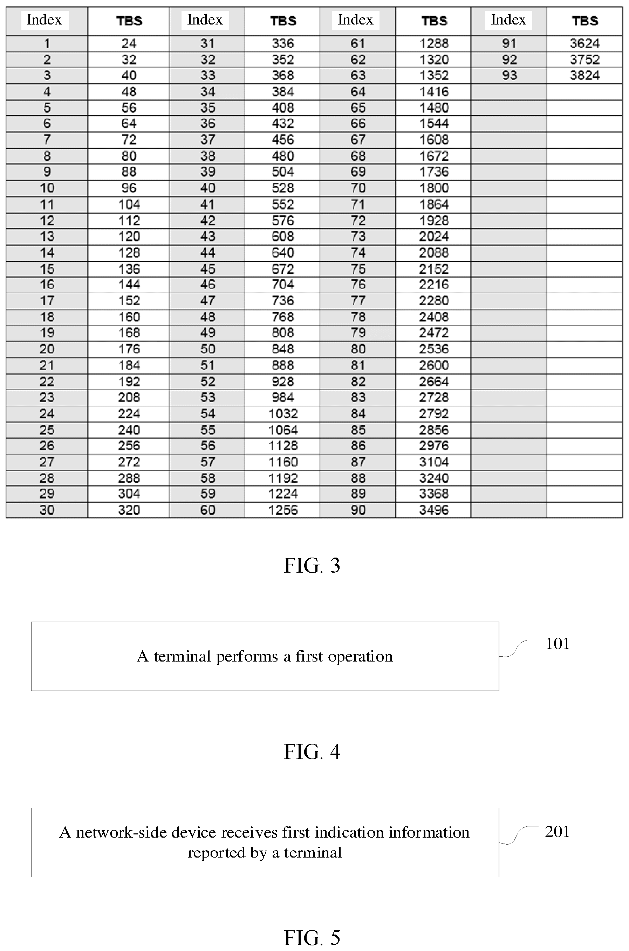

Step 3: When *N_{info}* ≤ 3824,
(1) Quantize the number of intermediate information bits ${N}_{info}^{′} = max \left({24 , 2}^{n}⋅\left⌊\frac{{N}_{info}}{{2}^{n}}\right⌋\right)$, where $n = max \left(3,\left⌊{log}_{2}\left({N}_{info}\right)\right⌋-6\right)$.
(2) Find the closest TBS not less than ${N}_{info}^{′}$ in FIG. 3. FIG. 3 shows the TBS under *N_{info}* ≤ 3824.

Step 4: When *N_{info}* > 3824,
Quantize the intermediate number ${N}_{info}^{′} = max \left({3840 , 2}^{n}\times round\left(\frac{{N}_{info} - 24}{{2}^{n}}\right)\right)$, where $n = \left⌊{log}_{2}\left({N}_{info}-24\right)\right⌋ - 5$.

If the target code rate *R* ≤ 1 / 4, $TBS = 8 ⋅ C ⋅ \left⌈\frac{{N}_{info}^{′} + 24}{8 ⋅ C}\right⌉ - 24 ,$ where $C = \left⌈\frac{{N}_{info}^{′} + 24}{3816}\right⌉$; otherwise (*R* > 1/4).

If *N_{info}* > 8424, $TBS = 8 ⋅ C ⋅ \left⌈\frac{{N}_{info}^{′} + 24}{8 ⋅ C}\right⌉ - 24$, where $C = \left⌈\frac{{N}_{info}^{′} + 24}{8424}\right⌉$; otherwise, $TBS = 8 ⋅ \left⌈\frac{{N}_{info}^{′} + 24}{8}\right⌉ - 24$.

The following specifically describes a communication operation execution method and apparatus, an information receiving method and apparatus, and a related device provided in the embodiments of this application through specific embodiments and application scenarios thereof with reference to the accompanying drawings.

Referring to FIG. 4, FIG. 4 is a flowchart of a communication operation execution method according to an embodiment of this application. As shown in FIG. 4, the communication operation execution method includes the following step.

Step 101: A terminal performs a first operation.

The first operation includes at least one of the following:
the terminal determines, based on first information, a transmission manner of a first uplink transmission;
the terminal determines, based on information included in the first uplink transmission, the transmission manner of the first uplink transmission;
the terminal determines, based on a target condition, the transmission manner of the first uplink transmission; and
the terminal performs transmission of the first uplink transmission using a first transmission manner; where
the first transmission manner is uplink transmission based on an orthogonal cover code (Orthogonal cover code, OCC) sequence, the first transmission manner is one of transmission manners of the first uplink transmission, and the first information is used for determining an OCC sequence.

The first uplink transmission may include control information, or the first uplink transmission may include control information and data. The control information may be uplink control information (Uplink Control Information, UCI), or other control information, for example, the control information may include at least one of HARQ-ACK, CSI, and SR. This is not limited in this embodiment.

The first information may include at least one of the following:
related information of the target block; and OCC configuration information.

In this implementation, the related information of the target block may include at least one of the following:
a size of the target block; the number of target blocks; bitmap information of the target block; position information of the target block; an index of the target block; and enable information of the target block.

The bitmap information of the target block is used to determine whether to enable applying an OCC sequence within the target block.

The enable information of the target block may indicate whether to enable the target block.

It should be noted that the target block in the at least one target block is merely a generic term, representing a generic term for part of resource sets in frequency domain for the uplink transmission, and for example, may alternatively be described as a block, a multiplexed block, a resource set, a multiplexed resource block, or the like.

The size of the target block may be used to determine a size of resource occupied by one target block in frequency domain. Data of at least one user (namely, the terminal) may be multiplexed onto one target block, and independent DFT transformation (such as transmission precoding or pre-DFT transformation) is performed for each target block.

In addition, the size of the target block may be in units of resource elements (Resource element, RE) or subcarriers (subCarrier), or in units of RBs, or in units of resource element groups (Resource Element Group, REG). For example, for the Internet of things (Internet of Things, IoT), scheduling may be performed by single tone (single Tone) or multi-tones (Multi-Tones), so the size of the target block may be less than 1RB. For NR, scheduled frequency domain resources are based on RBs as the basic granularity, so the target block size may be greater than or equal to 1RB.

In addition, the size of the target block may be indicated separately, or may be coordinated with frequency domain resource allocation (Frequency Domain Resource Allocation, FDRA), or may be specified by a protocol, or is implicitly determined based on other indication information, for example, being determined based on the number of users or user groups multiplexed on the target block through frequency domain resources and OCC length.

In an implementation, the size of the target block, the number of target blocks, and allocated resources satisfy: the size of the target block * the number of target blocks = frequency domain resources allocated for uplink transmission (the number of RBs, the number of REs, or the number of subcarriers) or transmission bandwidth (the number may be expressed by the number of REs or the number of subcarriers, provided that a same granularity is maintained between several variables).

In addition, based on the size of the target block, combined with the frequency domain resources allocated by FDRA, the number of target blocks can also be determined.

It should be noted that the number of target blocks indicates how many target blocks the frequency domain resources allocated by FDRA are divided into, and indirectly, it also determines the size of the target block.

In an implementation, a bitmap (bitmap) of the target block corresponds to the number of target blocks, indicating whether each target block enables target uplink transmission. Not enabling means not performing target uplink transmission, performing uplink transmission according to a normal procedure, or implementing whether to enable target uplink transmission through dedicated enable information of the target block, where the target uplink transmission is an uplink transmission based on an OCC sequence within the at least one target block.

The position of the target block is determined based on the frequency domain resources allocated by FDRA, and the size or number of target blocks.

In an implementation, the OCC configuration information may be used to configure at least one of the following:
OCC base sequence information; OCC index information; OCC length; and OCC multiplexing factor.

The OCC multiplexing factor may indicate the number of multiplexed users, for example, how many users may be multiplexed within a target block.

The OCC base sequence information may include an OCC base sequence set, an OCC base sequence table, an OCC base sequence, or the like, for determining the OCC base sequence.

The OCC index information may include an OCC index, an OCC index set, an OCC index table, or the like, for determining the OCC index.

In an implementation, the OCC configuration information may include at least one of the following: an OCC base sequence set or an OCC base sequence, an OCC index or an OCC index set, an OCC length, and an OCC multiplexing factor.

The OCC index is used to determine which OCC base sequence to select from the OCC base sequence set, and a corresponding OCC base sequence may be obtained from the OCC base sequence set based on the OCC index and the OCC length.

The OCC index set is used to indicate OCC indexes used by different streams. For example, the 1st OCC index in the OCC index set corresponds to an OCC index used for the 1st stream.

Different target blocks may indicate different OCC indexes.

The OCC length is a length of one OCC base sequence, which may be determined based on the maximum number of multiplexed users that can be supported in the target block.

In an implementation, the OCC sequence may be obtained by performing a first calculation based on the OCC base sequence and the size of the target block.

In an implementation, the OCC sequence may be obtained by performing a first calculation based on the size of the target block corresponding to the OCC base sequence.

The OCC base sequence may be an OCC base sequence carried by the first information, or an OCC sequence in the related art, such as OCC2 or OCC4.

OCC2 is shown in the following table:

| *n* | *wₙ* |
|---|---|
| 0 | [+1 +1] |
| 1 | [+1 -1] |

OCC4 is shown in the following table:

| *n* | *wₙ* |
|---|---|
| 0 | [+1 +1 +1 +1] |
| 1 | [+1 -*j* -1 +*j*] |
| 2 | [+1 -1 +1 -1] |
| 3 | [+1 +*j* -1 -*j*] |

The first calculation may be obtaining a sequence of the same length as the target block by repeating each element in the OCC base sequence for the same number of times.

It should be noted that the size of the target block may be divided by the length of the OCC base sequence to obtain the number of times each element in the OCC sequence needs to be repeated. For example, if the target block size is 2RB=24REs, and the OCC base sequence is: [1 1i -1 -1i]; then after the first calculation is applied, the OCC sequence used within the target block is: [1 1 1 1 1 1 1i 1i 1i 1i 1i 1i -1 -1 -1 - 1 -1 -1 -1i -1i -1i -1i -1i -1i].

In an implementation, the transmission manner of the first uplink transmission determined by the terminal based on the first information may be the first transmission manner. The terminal determines the OCC sequence based on the first information, and performs transmission of the first uplink transmission based on the OCC sequence.

That the terminal performs the first uplink transmission using the first transmission manner may include: the terminal performs uplink transmission based on an OCC sequence within at least one target block, where OCC sequences corresponding to the at least one target block are the same; or in a case that the first uplink transmission is PUSCH, the terminal performs uplink transmission through OCC-based block-wise spreading. The implementation of OCC-based block-wise spreading for PUSCH is similar to the implementation of OCC-based block-wise spreading for PUCCH in the related art, which is not described in detail again here.

It should be noted that the target block may alternatively be described as a block, or a multiplexed block, or the like. The OCC sequences corresponding to the at least one target block being the same may be understood as the OCC sequences used for one transmission of one terminal in different target blocks are the same.

It should be noted that the first uplink transmission may be understood as uplink resources.

The first uplink transmission may include physical uplink control channel (Physical Uplink Control Channel, PUCCH) transmission, physical uplink shared channel (Physical Uplink Shared Channel, PUSCH) transmission, narrowband physical uplink shared channel (Narrowband Physical Uplink Shared Channel, NPUSCH) transmission, or the like, which is not limited in this embodiment.

In an implementation, the first uplink transmission may be PUSCH.

In an implementation, the UE determines that at least part of the first uplink transmission is not transmitted based on the transmission manner of the first uplink transmission that is determined based on the first information, or is transmitted in other manners. During generating or processing of a bit stream corresponding to at least part of the first uplink transmission, a corresponding OCC is an all-1 sequence, or OCC-related operations are skipped. Other manners may be transmission manners that directly map to-be-transmitted information to transmission resources for transmission.

In an implementation, the UE determines that at least part of the first uplink transmission is based on the transmission manner of the first uplink transmission that is determined based on the first information. During generating or processing of a bit stream corresponding to at least part of the first uplink transmission, a corresponding OCC is a sequence determined based on the first information.

In an implementation, that the terminal performs the first uplink transmission using the first transmission manner may include: the terminal performs uplink transmission based on an OCC sequence within at least one target block. That the terminal performs uplink transmission based on the OCC sequence within at least one target block includes:
the terminal multiplies transmission symbols mapped within each target block of the at least one target block by the OCC sequence to obtain a first transmission symbol corresponding to each target block;
the terminal performs discrete fourier transform (DFT) processing on the first transmission symbol corresponding to each target block to obtain a second transmission symbol corresponding to each target block; and
the terminal performs uplink transmission based on the second transmission symbol corresponding to each target block.

The DFT transformation processing may include DFT transformation processing corresponding to transmission precoding, for example, Pre-DFT transformation. Pre-DFT transformation may alternatively be described as transmission precoding transformation.

The transmission symbol may refer to a complex-valued constellation point symbol obtained after modulation. Physical layer processes from modulation to resource mapping are all processed in the form of transmission symbols (or described as symbol-level processing, or non-bit-level processing).

In an implementation, performing uplink transmission based on the OCC sequence within the target block may be multiplying transmission symbols mapped within the target block by the OCC sequence, and then performing pre-DFT transformation or transmission precoding to obtain transmission symbols before frequency domain mapping.

For example, taking a formula similar to format 4 as an example,
it is assumed that *d*(0), ..., *d*(*M*_{symb} - 1) is a replicated modulated symbol before an uplink transmission operation is performed based on the OCC sequence within the target block, and *y*(0), ..., *y*(*M*_{symb}*L* - 1) represents a replicated modulated symbol before pre-DFT transformation or transmission precoding.

In an implementation, for symbol # *l* within target block # *i,* transmission symbols mapped within the target block are multiplied by the OCC sequence, corresponding to the following formula: $y \left({lM}_{block}{N}_{symb}^{block}L+{iN}_{size}^{block}+b\right) = {w}_{n} \left(\left⌊\frac{b}{{N}_{symb}^{block}}\right⌋\right) d \left(\begin{matrix}{lM}_{block} {N}_{symb}^{block} + \\ {iN}_{symb}^{block} + b mod {N}_{symb}^{block}\end{matrix}\right) ;$ where: $i = 0 , 1 , … , {M}_{block} - 1 ;$ $b = 0 , 1 , … , {N}_{size}^{block} - 1 ;$ ${M}_{sc} = {M}_{block} {N}_{size}^{block} ;$ $i = \left⌊\frac{k}{{N}_{size}^{block}}\right⌋ , k = 0 , 1 , … , {M}_{sc} - 1 ;$ $l = 0 , 1 , … , \left({M}_{symb}L/{M}_{sc}\right) - 1 ;$
*M*_{sc} represents the number of subcarriers or REs corresponding to frequency domain resources allocated for uplink transmission;
*M*_{symb} represents the number of replicated modulated symbols that can be transmitted by the uplink transmission;
*M*_{block} represents the number of target blocks (within a bandwidth allocated for uplink transmission/within frequency domain resources);
${N}_{size}^{block}$ represents the size of the target block, in units of REs or subcarriers;
*L* represents an OCC length or multiplexing factor;
${N}_{symb}^{block}$ represents the number of complex-valued modulated symbols transmitted within one target block;
n is determined based on an OCC index, and *wₙ* represents an OCC base sequence;
satisfying: ${N}_{symb}^{block} = {N}_{size}^{block} / L , {M}_{sc} = {M}_{block} {N}_{size}^{block}$.

In an implementation, for the entire uplink transmission (including all scheduled time domain symbols, that is, *l* = 0,1, ... , (*M*_{symb}*L*/*M*_{sc}) - 1): $y \left({lM}_{block}{N}_{symb}^{block}L+k\right) = {w}_{n} \left(\left⌊\frac{k mod {N}_{size}^{block}}{{N}_{symb}^{block}}\right⌋\right) d \left(\begin{matrix}{lM}_{block} {N}_{symb}^{block} + \\ \left⌊\frac{k}{{N}_{size}^{block}}\right⌋ {N}_{symb}^{block} + k mod {N}_{symb}^{block}\end{matrix}\right) ;$ where: $k = 0 , 1 , … , {M}_{sc} - 1 ; l = 0 , 1 , … , \left({M}_{symb}L/{M}_{sc}\right) - 1 ;$
*M*_{sc} represents the number of subcarriers or REs corresponding to frequency domain resources allocated for uplink transmission;
*M*_{symb} represents the number of replicated modulated symbols that can be transmitted by the uplink transmission;
*M*_{block} represents the number of target blocks (within an allocated bandwidth for uplink transmission or within frequency domain resources);
${N}_{size}^{block}$ represents the size of the target block, in units of REs or subcarriers;
*L* represents an OCC length or multiplexing factor;
${N}_{symb}^{block}$ represents the number of complex-valued modulated symbols transmitted within one target block; and
n is determined based on an OCC index, and *wₙ* represents an OCC base sequence;
satisfying: ${N}_{symb}^{block} = {N}_{size}^{block} / L , {M}_{sc} = {M}_{block} {N}_{size}^{block}$.

From the above formula, it may be seen that the number of complex-valued symbols needs to be scaled compared to the normal uplink transmission process.

In an implementation, the terminal performing transmission of the first uplink transmission using the first transmission manner may include: the terminal mapping transmission symbols to a first transmission unit in at least one target block; the terminal performing uplink transmission based on a first OCC sequence within the at least one target block; where the transmission symbols are mapped to the first transmission unit through a second OCC sequence, or the first OCC sequences corresponding to the at least one target block are the same. The first information can further include information related to the first transmission unit, and information related to the first transmission unit includes at least one of the following: a size of the first transmission unit; the number of first transmission units; a position of the first transmission unit; and an index of the first transmission unit. One target block may include one or more first transmission units, and the size or quantity or position or index of the first transmission unit is defined within one target block; or in other words, one or more first transmission units are divided within one target block.

It should be noted that the first transmission unit is merely a generic term, representing a generic term for some resource sets obtained by dividing the target block, for example, it can also be described as a sub-block, or a multiplexed sub-block, or a resource subset, or a multiplexed resource sub-block, or the like.

In an implementation, the terminal mapping the transmission symbols to the first transmission unit in at least one target block may include any one of the following:
the terminal multiplying transmission symbols mapped by the first transmission unit in at least one target block by a corresponding second OCC sequence to obtain a third transmission symbol, and performing transformation processing on the first transmission symbol to obtain a fourth transmission symbol corresponding to the first transmission unit; and
the terminal mapping transmission symbols mapped by the first transmission unit in at least one target block to the first transmission unit through a first mapping manner.

The first mapping manner includes at least one of the following:
sub physical resource block sub-PRB mapping; single tone (single tone) mapping; multi-tones (multi-tones) mapping; comb (comb) mapping; and interlace (interlace) mapping.

In an implementation, the implementation of the terminal multiplying transmission symbols mapped by the first transmission unit in at least one target block by a corresponding second OCC sequence to obtain a third transmission symbol, and performing transformation processing on the first transmission symbol to obtain a fourth transmission symbol y corresponding to the first transmission unit is as follows:
it is assumed that $d \left(0\right) , … , d \left({N}_{symb}^{block}-1\right)$ is a replicated modulated symbol before the uplink transmission operation is performed based on the second OCC sequence within the first transmission unit, and *y*(*0*), *... , y*(*L -* 1) represents a replicated modulated symbol before pre-DFT transformation.

For symbol #*l* within first transmission unit *#i,* the transmission symbols mapped within the first transmission unit are multiplied by the second OCC sequence, corresponding to the following formula: $y \left({iN}_{size}^{block}+b\right) = {w}_{n} \left(\left⌊\frac{b}{{N}_{symb}^{block}}\right⌋\right) d \left({iN}_{symb}^{block}+b mod {N}_{symb}^{block}\right) ;$ where: $i = 0 , 1 , … , {M}_{block} - 1 ;$ $b = 0 , 1 , … , {N}_{size}^{block} - 1 ;$ $i = \left⌊\frac{k}{{N}_{size}^{block}}\right⌋ , k = 0 , 1 , … , {M}_{sc} - 1 ;$
*M*_{block} represents the number of first transmission units within one target block;
${N}_{size}^{block}$ represents the size of the target block, in units of REs or subcarriers;
${N}_{symb}^{block} = {N}_{size}^{block} / L$*,* where *L* represents the OCC length or multiplexing factor;
${N}_{symb}^{block}$ represents the number of complex-valued modulated symbols transmitted by the current UE within a first transmission unit;
n is determined by the OCC index, and *wₙ* represents the second OCC base sequence; and
the first transmission unit #i is a first transmission unit number or index corresponding to the current terminal.

In addition, after the first transmission unit is multiplied by the corresponding second OCC sequence, the implementation of mapping to the corresponding transmission resources after pre-DFT transformation is as follows:
after pre-DFT transformation, *y*(*0*), ..., *y*(*L* - 1) becomes *Y*(0), *... , Y*(*L -* 1) , and *Y*(*0*), *... , Y*(*L -* 1) is mapped to transmission resources corresponding to the first transmission unit, so as to obtain the complex-valued transmission symbols before the operation of uplink transmission is performed based on the first OCC sequence in the target block.

It should be noted that the implementation of the terminal performing uplink transmission based on the first OCC sequence within the at least one target block is similar to the aforementioned implementation of the terminal performing uplink transmission based on the OCC sequence within at least one target block, which is not described in detail again here.

In an implementation, the UE determines whether to determine, based on the first information, the transmission manner of the first uplink transmission.

In NTN scenarios, due to a large coverage area and potentially large number of accessed users, to improve system capacity and uplink user multiplexing capability, the uplink channel needs to be enhanced for capacity improvement. Since NTN scenarios only support single-layer transmission, and DMRS ports already support multi-port multiplexing, it is necessary to enhance the data part of the uplink channel for capacity improvement. In the embodiments of this application, the terminal performs transmission of the first uplink transmission using the first transmission manner, and performing uplink transmission based on the OCC sequence to implement multi-user multiplexing of OCC, which can solve the above limitations.

It should be noted that the embodiments of this application are applicable to NTN scenarios, but are not limited to NTN scenarios, and are also applicable to, for example, TN scenarios.

The embodiments of this application are applicable not only to NR systems, but also to LTE NB-IoT or IoT NTN systems, or the like.

In embodiments of this application, the terminal determines the transmission manner of the first uplink transmission based on the first information; or the terminal determines, based on the information included in the first uplink transmission, the transmission manner of the first uplink transmission; or the terminal determines, based on the target condition, the transmission manner of the first uplink transmission. In this way, determining the transmission manner of the first uplink transmission based on the first information, the information included in the first uplink transmission, or the target condition can improve the flexibility of determining the transmission manner, thereby improving the uplink transmission performance; or, the terminal performs transmission of the first uplink transmission using the first transmission manner, where the first transmission manner is uplink transmission based on an orthogonal cover code OCC sequence, and the OCC sequence can implement multiplexing of transmission resources, which can improve the utilization rate of transmission resources, thereby improving the uplink transmission performance.

Optionally, the target condition includes a first condition, and that the terminal determines, based on the target condition, the transmission manner of the first uplink transmission includes:
in a case that the first condition is satisfied, the terminal performs transmission of the first uplink transmission using the first transmission manner; where
the first condition includes at least one of the following:
   the number of resources corresponding to the first uplink transmission is within a first preset range, where the first preset range is less than or equal to a first preset value, or the first preset range is greater than or equal to a second preset value;
   a transport block size (Transport Block Size, TBS) corresponding to the first uplink transmission is within a second preset range, where the second preset range is less than or equal to a third preset value;
   a modulation and coding scheme (Modulation and coding scheme, MCS) corresponding to the first uplink transmission is within a third preset range, where the third preset range is less than or equal to a fourth preset value;
   a code rate corresponding to the first uplink transmission is within a fourth preset range, where the fourth preset range is less than or equal to a fifth preset value;
   the first uplink transmission uses a target modulation scheme;
   a modulation order corresponding to the first uplink transmission is within a fifth preset range, where the fifth preset range is less than or equal to a sixth preset value;
   the first uplink transmission uses a target waveform;
   a resource allocation mode corresponding to the first uplink transmission is a target type;
   a subcarrier spacing (Subcarrier Spacing, SCS) corresponding to the first uplink transmission is a target SCS;
   a cyclic prefix (Cyclic prefix, CP) corresponding to the first uplink transmission is a target CP;
   a direct current (Direct Current, DC) subcarrier corresponding to the first uplink transmission is located at a target position;
   a priority index corresponding to the first uplink transmission is a target priority index, or there is no corresponding priority index for the first uplink transmission;
   the first uplink transmission includes control information, or the first uplink transmission does not include control information;
   the number of resources corresponding to the first uplink transmission is an even number or a first parameter or a multiple of the first parameter, where the first parameter is an OCC multiplexing factor or the number of multiplexed terminals;
   the terminal is indicated with first information, or is configured with first information, or is activated with first information, where the first information is used for determining the OCC sequence; and
   the terminal is indicated with the first transmission manner, or is configured with the first transmission manner, or is activated with the first transmission manner.

It should be noted that this embodiment of this application does not limit specific settings of the first preset value, the second preset value, the third preset value, the fourth preset value, the fifth preset value, the sixth preset value, the first preset range, the second preset range, the third preset range, the fourth preset range, the fifth preset range, the target waveform, the target type, the target SCS, the target CP, the target position, or the target priority index. For example, the first preset value may be 1, 2, 3, 4, or the like. The first preset range may be [1, 10], [2, 10], or [3, 12], or the like. The target waveform may be DFT-S-OFDM; the target type may be type1 or type2; the target SCS may be 15kHz or 30kHz; the target CP may be normal cyclic prefix (Normal Cyclic Prefix, NCP); the target position may be outside the carrier, or outside resources corresponding to the first uplink transmission, or at a specific position indicated or configured by the base station. The target priority index may be index=1, or index=0.

It should be noted that the setting of the preset value or preset range in the embodiments of this application may be related to the first information. For example, the preset value or preset range in the embodiments of this application may be constrained by an OCC length or OCC sequence length determined based on the first information, for example, being a multiple of the OCC length or OCC sequence length, or being a factor of the OCC length or OCC sequence length.

In an implementation, the setting of the first preset value, the second preset value, the third preset value, the fourth preset value, the fifth preset value, the sixth preset value, the first preset range, the second preset range, the third preset range, the fourth preset range, or the fifth preset range is related to the first information. For example, the first preset value, the second preset value, the third preset value, the fourth preset value, the fifth preset value, or the sixth preset value is constrained by the OCC length or OCC sequence length, for example, being a multiple of the OCC length or OCC sequence length, or being a factor of the OCC length or OCC sequence length. Boundary values of the first preset range, the second preset range, the third preset range, the fourth preset range, or the fifth preset range are constrained by the OCC length or OCC sequence length, for example, being a multiple of the OCC length or OCC sequence length, or being a factor of the OCC length or OCC sequence length.

In this implementation, in a case that the first condition is satisfied, the terminal performs transmission of the first uplink transmission using the first transmission manner, which can achieve better uplink transmission performance.

Optionally, the method further includes:
reporting, by the terminal, first indication information to a network-side device, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

In this implementation, the terminal reports the first indication information to the network-side device, so that the network-side device can configure, based on the first indication information, information (for example, the first information) for the terminal to determine the transmission manner of the first uplink transmission, so that the terminal can determine, based on the first information, the transmission manner of the first uplink transmission, which can improve the flexibility of determining the transmission manner, thereby improving the uplink transmission performance.

Optionally, the target condition includes a second condition, and that the terminal determines, based on the target condition, the transmission manner of the first uplink transmission includes any one of the following:
in a case that the second condition is satisfied, the terminal performs transmission of the first uplink transmission using a second transmission manner, or the terminal does not perform the first uplink transmission, where the second transmission manner is different from the first transmission manner; and
in a case that the second condition is satisfied, the terminal performs transmission of the first uplink transmission using the first transmission manner, and an OCC sequence corresponding to the first transmission manner is a preset sequence; where
the second condition includes at least one of the following:
   the terminal does not satisfy the first condition;
   the terminal does not satisfy a third condition;
   the terminal is indicated not to use the first information, or is configured not to use the first information;
   the first information is deactivated for the terminal;
   the terminal is indicated not to use the first transmission manner, or is configured not to use the first transmission manner;
   the first transmission manner is deactivated for the terminal; and
   the terminal is indicated with the second transmission manner, or is configured with the second transmission manner, or is activated with the second transmission manner.

The second transmission manner may be a transmission manner that does not use the OCC sequence or first information for uplink transmission, for example, a transmission manner that directly maps to-be-transmitted information onto transmission resources for transmission.

The preset sequence may be an all-1 sequence, that is, all values of the OCC sequence are 1.

In an implementation, the third condition includes at least one of the following:
the number of resources corresponding to the first uplink transmission is within a first preset range, where the first preset range is less than or equal to a first preset value, or the first preset range is greater than or equal to a second preset value;
a transport block size TBS corresponding to the first uplink transmission is within a second preset range, where the second preset range is less than or equal to a third preset value;
a modulation and coding scheme MCS corresponding to the first uplink transmission is within a third preset range, where the third preset range is less than or equal to a fourth preset value;
a code rate corresponding to the first uplink transmission is within a fourth preset range, where the fourth preset range is less than or equal to a fifth preset value;
the first uplink transmission uses a target modulation scheme;
a modulation order corresponding to the first uplink transmission is within a fifth preset range, where the fifth preset range is less than or equal to a sixth preset value;
the first uplink transmission uses a target waveform;
a resource allocation mode corresponding to the first uplink transmission is a target type;
a subcarrier spacing SCS corresponding to the first uplink transmission is a target SCS;
a cyclic prefix CP corresponding to the first uplink transmission is a target CP;
a direct current DC subcarrier corresponding to the first uplink transmission is located at a target position;
a priority index corresponding to the first uplink transmission is a target priority index, or there is no corresponding priority index for the first uplink transmission;
the first uplink transmission includes control information, or the first uplink transmission does not include control information;
the number of resources corresponding to the first uplink transmission is an even number or a first parameter or a multiple of the first parameter, where the first parameter is an OCC multiplexing factor or the number of multiplexed terminals;
the terminal is indicated with first information, or is configured with first information, or is activated with first information, where the first information is used for determining the OCC sequence; and
the terminal is indicated with the first transmission manner, or is configured with the first transmission manner, or is activated with the first transmission manner.

In this implementation, in a case that the second condition is satisfied, the terminal performs transmission of the first uplink transmission using a second transmission manner, or the terminal does not perform the first uplink transmission, where the second transmission manner is different from the first transmission manner; or in a case that the second condition is satisfied, the terminal performs transmission of the first uplink transmission using the first transmission manner, and an OCC sequence corresponding to the first transmission manner is a preset sequence, thereby achieving better uplink transmission performance.

Optionally, the first uplink transmission includes control information, or the first uplink transmission includes control information and target data.

That the terminal determines, based on the first information, the transmission manner of the first uplink transmission includes any one of the following:
at least part of the first information corresponds to the control information, and the terminal determines, based on the at least part of the first information, a transmission manner of the control information;
at least part of the first information corresponds to the target data, and the terminal determines, based on the at least part of the first information, a transmission manner of the target data;
the first information includes first part information corresponding to the control information and second part information corresponding to the target data, the terminal determines the transmission manner of the control information based on the first part information, and determines the transmission manner of the target data based on the second part information; and
the number of pieces of first information is at least two, and the at least two pieces of first information include first information corresponding to the control information and first information corresponding to the target data; and the terminal determines the transmission manner of the control information based on the first information corresponding to the control information, and determines the transmission manner of the target data based on the first information corresponding to the target data.

In an implementation, the first information may correspond only to the control information, and the terminal determines the transmission manner of the control information based on the first information, and the determined transmission manner of the control information may be the first transmission manner.

In an implementation, the first information may correspond only to the target data, the terminal determines the transmission manner of the target data based on the first information, and the determined transmission manner of the target data may be the first transmission manner.

Optionally, the method further includes:
receiving, by the terminal, second indication information sent by a network-side device; where
the second indication information is used to indicate at least one of the following:
   first information corresponding to control information of the first uplink transmission;
   first information corresponding to data of the first uplink transmission;
   whether the first uplink transmission including the control information is transmitted using or not using the first transmission manner;
   whether the first information is used or not used for the first uplink transmission including the control information;
   whether the first information is ignored or not ignored for the first uplink transmission including the control information;
   whether the data of the first uplink transmission is transmitted using or not using the first transmission manner;
   whether the first information is used or not used for determining of a transmission manner for the data of the first uplink transmission;
   whether the first information is ignored or not ignored for determining of a transmission manner for the data of the first uplink transmission;
   whether the control information of the first uplink transmission is transmitted using or not using the first transmission manner;
   whether the first information is used or not used for determining of a transmission manner for the control information of the first uplink transmission; and
   whether the first information is ignored or not ignored for determining of a transmission manner for the control information of the first uplink transmission.

It should be noted that "use" can also be expressed as "adopt", or "adopt" can also be expressed as "use".

In addition, taking the second indication information being used to indicate whether the first information is used or not used for the first uplink transmission including control information as an example, the second indication information may be 2-bit indication information, for example, the 1st bit is used to indicate using the first information, and the 2nd bit is used to indicate not using the first information; or the second indication information may be 1-bit indication information, and the 1-bit indication information may be 0 or 1, for example, when the second indication information is 0, it indicates using the first information, and when the second indication information is 1, it indicates not using the first information; and so on. This embodiment does not limit the specific implementation of the second indication information.

In an implementation, the base station indicates to the terminal for which part of resources or which part of bits (bit) the transmission manner needs to be determined based on the first information, or the base station indicates to the terminal for which part of resources or which part of bits the transmission manner is not determined based on the first information (for example, using a current transmission manner), or indicates at least one of the first condition or the second condition. The base station may indicate at least part of the first uplink transmission, and for the part indicated by the base station, the transmission manner may need to be determined based on the first information, or the transmission manner does not need to be determined based on the first information.

For example, if the first uplink transmission includes UCI and data, and transmission of the UCI part does not use the transmission manner corresponding to OCC, while transmission of the data part uses the transmission manner corresponding to OCC, then the base station may indicate which parts of a bit string corresponding to the first uplink transmission use the transmission manner corresponding to OCC, or which parts do not need to use the transmission manner corresponding to OCC.

For example, the base station indicates one set, and the set includes at least one of {UCI, data (data)}. If the set includes UCI and data, it indicates that transmission of both UCI and data needs to use the transmission manner corresponding to OCC. If it includes only data, it indicates that only transmission of the data needs to use the transmission manner corresponding to OCC.

For example, UCI or data has corresponding enable information. If the base station provides the enable information or sets the enable information to enable, it indicates that transmission of UCI or data uses the transmission manner corresponding to OCC. The UCI and data parts may uniformly adopt one piece of enable information, or they each may correspond to one piece of enable information.

For example, UCI or data has corresponding disable information. If the base station provides the disable information or sets the disable information to disable, it indicates that transmission of UCI or data does not use the transmission manner corresponding to OCC or is transmitted based on other manners. The UCI and data parts may uniformly adopt one piece of disable information, or they each may correspond to one piece of disable information.

It should be noted that when indicating to the terminal which part of bits uses the transmission manner corresponding to OCC or which part of bits does not use the transmission manner corresponding to OCC, the base station may indicate a start point, length, end point, corresponding position, or index of the part; or when indicating to the terminal which part of resources uses the transmission manner corresponding to OCC or which part of resources does not use the transmission manner corresponding to OCC, the base station may indicate a start point, length, end point, corresponding position, or index of the resources.

In this implementation, the terminal receives the second indication information sent by the network-side device, so as to determine, based on the first information, the transmission manner of the first uplink transmission indicated by the second indication information, or determine the transmission manner of the first uplink transmission based on the second indication information and the information included in the first uplink transmission, which can improve the flexibility of determining the transmission manner, thereby improving the uplink transmission performance.

Optionally, the first information corresponding to the control information of the first uplink transmission is at least partially different from the first information corresponding to the data of the first uplink transmission.

Optionally, in a case that the first uplink transmission includes control information, that the terminal determines, based on the information included in the first uplink transmission, the transmission manner of the first uplink transmission includes at least one of the following:
the terminal determines that the transmission manner of the control information is a second transmission manner, where the second transmission manner is different from the first transmission manner;
the terminal determines that the transmission manner of the control information is the first transmission manner, and the OCC sequence corresponding to the first transmission manner is a preset sequence;
the terminal determines that the transmission manner of the first uplink transmission is a second transmission manner, where the second transmission manner is different from the first transmission manner;
the terminal determines that the transmission manner of the first uplink transmission is the first transmission manner, and the OCC sequence corresponding to the first transmission manner is a preset sequence;
the terminal determines not to use the first information for transmission of the first uplink transmission or the control information;
the terminal determines to ignore the first information for transmission of the first uplink transmission or the control information;
the terminal determines that the first transmission manner is deactivated for transmission of the first uplink transmission or the control information; and
the terminal does not perform the first uplink transmission.

In the related art, for block-wise spreading transmission manners similar to PUCCH format 4, OCC sequences may be used to implement multi-user multiplexing. When OCC sequences are used for multi-user multiplexing uplink transmission (such as PUSCH), the implementation manners may be different. Taking the first uplink transmission as PUSCH as an example, in a case that the first uplink transmission includes control information (such as UCI), the terminal may determine the transmission manner of the first uplink transmission based on the information included in the first uplink transmission.

Optionally, the terminal does not expect the first uplink transmission to overlap with a second uplink transmission, and the second uplink transmission is an uplink transmission other than the first uplink transmission.

Optionally, in a case that the first uplink transmission overlaps with a second uplink transmission, before the terminal determines, based on the first information, the transmission manner of the first uplink transmission, the method includes at least one of the following:
determining, by the terminal based on the first uplink transmission and the second uplink transmission, whether to transmit the first uplink transmission; and
determining, by the terminal based on the first uplink transmission and the second uplink transmission, control information carried on the first uplink transmission; where
the second uplink transmission is an uplink transmission other than the first uplink transmission.

In a case that the first uplink transmission overlaps with the second uplink transmission, whether to transmit the first uplink transmission or the UCI carried on the first uplink transmission may be determined based on the first uplink transmission and the second uplink transmission; and then the transmission manner of the first uplink transmission is determined.

For example, the first uplink transmission includes UCI and data, and the UCI part uses an OCC sequence or a transmission manner determined based on the first information, for transmission, or the data part uses an OCC sequence or a transmission manner determined based on the first information, for transmission; and the OCC sequences or determined transmission manners used by both are the same.

For example, the first uplink transmission includes UCI and data, and the UCI part does not use an OCC sequence or is transmitted in other manners, or the data part uses an OCC sequence or is transmitted in a transmission manner determined based on the first information. The UCI part is transmitted in other manners, for example, the UCI may be directly mapped to transmission resources for transmission, without using an OCC sequence for transmission.

For example, the first uplink transmission includes UCI and data, and the UCI part uses an OCC sequence or a transmission manner determined based on the first information, for transmission, or the data part uses an OCC sequence or a transmission manner determined based on the first information, for transmission; and the OCC sequences or determined transmission manners used by both are different.

Optionally, that the terminal performs the first uplink transmission using the first transmission manner includes:
determining, by the terminal based on the OCC sequence, a first transmission symbol corresponding to the first uplink transmission; and
transmitting, by the terminal, the first transmission symbol.

The first transmission symbol may be determined by a bit string corresponding to the first uplink transmission (data or UCI) through an OCC sequence. The terminal transmitting the first transmission symbol may include the terminal modulating the first transmission symbol using π/2-BPSK to obtain complex-valued modulated symbols for uplink transmission.

In addition, determining the first transmission symbol based on the OCC sequence may be multiplying the bit string corresponding to the first uplink transmission (data or UCI) by the OCC sequence.

Optionally, a time interval between the first uplink transmission and a reference point includes a first time, the first time corresponds to the transmission manner of the first uplink transmission, or the first time is determined based on the transmission manner of the first uplink transmission.

The reference point may be a time in which downlink control information DCI scheduling the first uplink transmission is located.

In an implementation, the time interval between the first uplink transmission and the reference point (for example, a time in which the DCI corresponding to or scheduling the uplink transmission is located) at least includes: a first time, where the first time is related to determining the transmission manner of the first uplink transmission based on the first information, or related to performing transmission based on the determined transmission manner.

Optionally, the method further includes:
reporting, by the terminal, a supported first time to a network-side device, or reporting third indication information, where the third indication information is used to indicate whether a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

In an implementation, the UE reports the supported first time, or whether the first time is needed.

In an implementation, if the UE does not report the first time, then the first time between the first uplink transmission and the reference point is 0, or the first time does not need to be included between the first uplink transmission and the reference point.

Optionally, the method further includes:
receiving, by the terminal, fourth indication information sent by a network-side device; where
the fourth indication information is used to indicate the transmission manner of the first uplink transmission, or the fourth indication information is used to indicate at least one of the target conditions.

In this implementation, the terminal receives the fourth indication information sent by the network-side device, so that the terminal can perform uplink transmission based on the transmission manner of the first uplink transmission indicated by the network-side device, or the terminal can perform uplink transmission based on the target condition indicated by the fourth indication information.

Optionally, the fourth indication information is used to indicate part of the first uplink transmission that uses the first transmission manner for transmission; or, the fourth indication information is used to indicate part of the first uplink transmission that uses a second transmission manner for transmission, and the second transmission manner is different from the first transmission manner.

Referring to FIG. 5, FIG. 5 is a flowchart of an information receiving method according to an embodiment of this application. As shown in FIG. 5, the information receiving method includes the following step.

Step 201: A network-side device receives first indication information reported by a terminal, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

Optionally, the method further includes:
sending, by the network-side device, second indication information to the terminal; where
the second indication information is used to indicate at least one of the following:
   first information corresponding to control information of the first uplink transmission;
   first information corresponding to data of the first uplink transmission;
   whether the first uplink transmission including the control information is transmitted using or not using the first transmission manner;
   whether the first information is used or not used for the first uplink transmission including the control information;
   whether the first information is ignored or not ignored for the first uplink transmission including the control information;
   whether the data of the first uplink transmission is transmitted using or not using the first transmission manner;
   whether the first information is used or not used for determining of a transmission manner for the data of the first uplink transmission;
   whether the first information is ignored or not ignored for determining of a transmission manner for the data of the first uplink transmission;
   whether the control information of the first uplink transmission is transmitted using or not using the first transmission manner;
   whether the first information is used or not used for determining of a transmission manner for the control information of the first uplink transmission; and
   whether the first information is ignored or not ignored for determining of a transmission manner for the control information of the first uplink transmission.

Optionally, the method further includes:
receiving, by the network-side device, a supported first time reported by the terminal, or receiving third indication information, where the third indication information is used to indicate whether a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

Optionally, the method further includes:
sending, by the network-side device, fourth indication information to the terminal; where
the fourth indication information is used to indicate the transmission manner of the first uplink transmission, or the fourth indication information is used to indicate at least one of target conditions.

Optionally, the method further includes:
in a case that the terminal does not report the supported first time, or does not report the third indication information, determining, by the network-side device, that the first time is 0, or that the time interval between the first uplink transmission and the reference point does not include the first time; where
the first time corresponds to the transmission manner of the first uplink transmission, or the first time is determined based on the transmission manner of the first uplink transmission, the reference point is a time in which downlink control information DCI scheduling the first uplink transmission is located, and the third indication information is used to indicate whether the time interval between the first uplink transmission and the reference point includes the first time.

It should be noted that this embodiment is an implementation of a network-side device corresponding to the embodiment shown in FIG. 4. For the specific implementation, reference may be made to the related description of the embodiment shown in FIG. 4. To avoid repeated descriptions, details are not repeated in this embodiment.

An embodiment of this application further provides a communication operation execution method, which may be executed by a network-side device, where the method includes:
in a case that a sixth condition is satisfied, determining, based on first information, a transmission manner of at least two first uplink transmissions; where
the sixth condition includes at least one of the following:
   time domain resources corresponding to the at least two first uplink transmissions are the same;
   start points, lengths, or end points of the time domain resources corresponding to the at least two first uplink transmissions are the same;
   frequency domain resources corresponding to the at least two first uplink transmissions are the same;
   start points, lengths, or end points of the frequency domain resources corresponding to the at least two first uplink transmissions are the same;
   the time domain resources corresponding to the at least two first uplink transmissions at least partially overlap;
   the frequency domain resources corresponding to the at least two first uplink transmissions at least partially overlap;
   reference signals corresponding to the at least two first uplink transmissions are orthogonal;
   the reference signals corresponding to the at least two first uplink transmissions at least partially overlap;
   the number of resources corresponding to the at least two first uplink transmissions are all less than or equal to a seventh preset value;
   the number of resources corresponding to the at least two first uplink transmissions are all greater than or equal to an eighth preset value;
   TBSs corresponding to the at least two first uplink transmissions are all less than or equal to a ninth preset value;
   TBSs corresponding to the at least two first uplink transmissions are the same;
   differences between any two TBSs corresponding to the at least two first uplink transmissions are all less than or equal to a tenth preset value;
   MCSs corresponding to the at least two first uplink transmissions are all less than or equal to an eleventh preset value;
   the at least two first uplink transmissions all use a same MCS, or a same MCS table;
   code rates corresponding to the at least two first uplink transmissions are all less than or equal to a twelfth preset value;
   code rates corresponding to the at least two first uplink transmissions are the same;
   differences between any two code rates corresponding to the at least two first uplink transmissions are all less than or equal to a thirteenth preset value;
   the at least two first uplink transmissions all use a target modulation scheme;
   modulation orders corresponding to the at least two first uplink transmissions are all less than or equal to a fourteenth preset value;
   the at least two first uplink transmissions all use a target waveform;
   resource allocation modes corresponding to the at least two first uplink transmissions are all a target type;
   frequency domain resources corresponding to each first uplink transmission in the at least two first uplink transmissions are all continuous in frequency domain;
   SCSs corresponding to the at least two first uplink transmissions are the same;
   CPs corresponding to the at least two first uplink transmissions are the same;
   DCs corresponding to the at least two first uplink transmissions are all located at a target position;
   priority indexes corresponding to the at least two first uplink transmissions are all a target priority index;
   the number of first uplink transmissions including UCI or target UCI in the at least two first uplink transmissions is less than or equal to a preset number;
   the at least two first uplink transmissions neither include UCI or target UCI;
   the at least two first uplink transmissions neither have a corresponding priority index;
   the at least two first uplink transmissions all include UCI or target UCI;
   the terminal is indicated, or configured with, or activated with the first information; and
   the terminal is indicated, or configured with, or activated with a first transmission determining manner, where the first transmission determining manner is determining a transmission manner of a first uplink transmission based on the first information.

Optionally, the method includes:
in a case that the sixth condition is not satisfied, not determining a transmission manner of the at least two first uplink transmissions based on the first information, or not performing part of first uplink transmissions in the at least two first uplink transmissions.

The following describes the communication operation execution method provided by the embodiments of this application by using a plurality of embodiments as examples.

### Embodiment 1

This embodiment provides conditions or limitations for uplink transmission based on OCC for a single UE.

In an implementation, the UE determining a transmission manner of a first uplink transmission includes: the UE determining the transmission manner of the first uplink transmission based on first information, where the first uplink transmission needs to satisfy a first condition (or expressed as: when at least one of the first conditions is satisfied, the UE may determine, based on the first information, the transmission manner of the first uplink transmission), and the first condition includes at least one of the following conditions:
a) The number of resources corresponding to the first uplink transmission is less than or equal to a specific value.

For example, the number of time domain resources corresponding to the first uplink transmission is less than or equal to value 1.

For example, the number of frequency domain resources corresponding to the first uplink transmission is less than or equal to value 2.

Alternatively, the number of resources corresponding to the first uplink transmission is greater than or equal to a specific value (similar to PUCCH format 3, whether multi-user multiplexing may be performed is related to the number of interlaces).

For example, the number of time domain resources corresponding to the first uplink transmission is less than or equal to value 3.

For example, the number of frequency domain resources corresponding to the first uplink transmission is less than or equal to value 4.

Optionally, the UE reports: for a specific maximum number of resources or a specific resource number range, the UE supports determining the transmission manner of the first uplink transmission based on the first information.

b) A TBS corresponding to the first uplink transmission is less than or equal to a specific value.

Optionally, the UE reports: for a specific maximum TBS value or a specific TBS range, the UE supports determining the transmission manner of the first uplink transmission based on the first information.

c) An MCS corresponding to the first uplink transmission is less than or equal to a specific value.

Optionally, the UE reports: for a specific maximum MCS value, an MCS range, or an MCS table, the UE supports determining the transmission manner of the first uplink transmission based on the first information.

d) A code rate corresponding to the first uplink transmission is less than or equal to a specific value.

Optionally, the UE reports: for a specific maximum code rate value or code rate range, the UE supports determining the transmission manner of the first uplink transmission based on the first information.

e) The first uplink transmission corresponds to a specific modulation scheme.

Optionally, the UE reports: for a specific modulation order scheme, the UE supports determining the transmission manner of the first uplink transmission based on the first information.

f) The number of modulation orders corresponding to the first uplink transmission is less than or equal to a specific value.

Optionally, the UE reports: for a specific maximum modulation order value or modulation order range, the UE determines the transmission manner of the first uplink transmission based on the first information or supports determining the transmission manner of the first uplink transmission based on the first information.
g) The first uplink transmission uses a specific waveform (such as DFT-S-OFDM).
h) A resource allocation mode corresponding to the first uplink transmission is type1 or type2.

Optionally, the UE reports: for a specific resource allocation mode, the UE supports determining the transmission manner of the first uplink transmission based on the first information.

i) The frequency domain resources corresponding to the first uplink transmission are continuous in frequency domain.

For example, interlace indexes corresponding to the first uplink transmission are continuous, or RBs corresponding to the first uplink transmission are continuous.

j) An SCS corresponding to the first uplink transmission is a specific SCS.

Optionally, for the first uplink transmission of an idle UE or the first uplink transmission in a specific stage (such as msgA or msg3 in the initial access stage), the specific SCS is 15kHz or 30kHz.

Optionally, the UE reports: for which SCSs, the UE supports determining the transmission manner of the first uplink transmission based on the first information.

k) A CP corresponding to the first uplink transmission is a specific CP (such as normal cyclic prefix (Normal Cyclic Prefix, NCP)).

Optionally, the UE reports: for which CPs, the UE supports determining the transmission manner of the first uplink transmission based on the first information.
l) A DC corresponding to the first uplink transmission is located at a specific position (for example, outside the carrier, outside the resources corresponding to the first uplink transmission, or at a specific position indicated or configured by the base station).
m) A priority index (priority index) corresponding to the first uplink transmission is a specific priority index (for example, index=1, or index=0).
n) There is no priority index corresponding to the first uplink transmission.
o) The first uplink transmission includes UCI, or includes specific UCI or target information (for example, hybrid automatic repeat request acknowledgement (Hybrid automatic repeat request acknowledgement, HARQ-ACK) or scheduling request (Scheduling Request, SR)).

For example, the first condition includes: the first uplink transmission includes UCI, and the number of resources corresponding to the first uplink transmission cannot exceed a specific value. If the multiplexed PUSCH bandwidth is too large, it may not be possible to ensure that UCI may be received normally, so if PUSCH carries UCI and is to be multiplexed, multiplexing can only be supported when the bandwidth is relatively small.

Alternatively, the first uplink transmission does not include UCI, for example, to avoid or not expect OCC for PUSCH with UCI. For example, the first condition includes: the first uplink transmission does not include UCI. The number of resources corresponding to the first uplink transmission may exceed a specific value.
p) The number of resources corresponding to the first uplink transmission is an even number or an SF number, or a multiple of SF, where SF is a multiplexing factor or the number of multiplexed users.
q) The base station has indicated or configured or activated the first information.
r) The base station has indicated or configured or activated the UE to determine, based on the first information, the transmission manner of the first uplink transmission.

It should be noted that, corresponding to the above UE reporting, the UE can also report the length, type, index, and the like of the supported first information, such as OCC length, OCC type, or OCC index (index).

It should be noted that, corresponding to the above UE reporting, it may be reported per (per) cell (cell), per carrier (carrier), per band (band), per band combination (band combination), per BWP, per TDRA table (table), per start and length indicator value (Start and length indicator value, SLIV), or per time interval K value.

In an implementation, that the UE determines the transmission manner of the first uplink transmission, includes: if a second condition is satisfied, the UE does not determine, based on the first information, the transmission manner of the first uplink transmission (or expressed as, not performing the first uplink transmission based on the first information; or expressed as, the transmission manner of the first uplink transmission determined based on the first information is disabled or invalid; or expressed as, the UE determines the first uplink transmission in other manners; or expressed as, determining the transmission manner of the first uplink transmission based on the first information, but at least part of the first information is a specific value, for example, the number of multiplexed users or the multiplexing factor is 1 or the OCC sequence is all 1s; or expressed as, the UE ignores the first information). In this case, the UE performs transmission of the first uplink transmission (for example, PUSCH). Alternatively, if the second condition is satisfied, the UE drops or does not transmit the first uplink transmission.

The second condition being satisfied includes at least one of the following:
the first uplink transmission does not satisfy at least one of the first conditions; for example, the UE is indicated to use or switch to a CP-OFDM waveform, that is, no longer use a DFT-S-OFDM waveform, then uplink transmission is no longer performed based on OCC;
the base station has indicated or configured not to use the first information, or the base station has indicated or configured the first information to be deactivated; and
the base station has indicated or configured or activated a second transmission manner, or the UE does not determine, based on the first information, the transmission manner of the first uplink transmission.

It should be noted that, for the above first condition or the above UE reporting, its granularity for reporting may be per (per) cell, per carrier, per band, per band combination, per BWP, per TDRA table, per SLIV, or per time interval K value.

### Embodiment 2

This embodiment provides conditions or limitations for uplink transmission based on OCC for multiple UEs.

In this implementation, a transmission manner of at least two first uplink transmissions is determined based on first information, where the at least two first uplink transmissions satisfy a sixth condition, and the sixth condition includes at least one of the following:
a) Time domain resources corresponding to the at least two first uplink transmissions are the same or completely overlap, or start points, lengths, or end points of the time domain resources are the same.
b) Frequency domain resources corresponding to the at least two first uplink transmissions are the same or completely overlap, or start points, lengths, or end points of the frequency domain resources are the same.

One implementation is that the frequency domain resources corresponding to the at least two first uplink transmissions are the same, and the time domain resources corresponding to the at least two first uplink transmissions have an inclusion relationship.

c) The time domain resources corresponding to the at least two first uplink transmissions at least partially overlap or have an inclusion relationship.

For example, time domain resources of one or a specific first uplink transmission includes time domain resources of another or more first uplink transmissions, and further, the time domain resources corresponding to the at least two first uplink transmissions have an inclusion relationship, but corresponding frequency domain resources do not completely overlap or are not completely included.

d) The frequency domain resources corresponding to the at least two first uplink transmissions at least partially overlap or have an inclusion relationship.

For example, PUSCH resources on symbols including DMRS of the first uplink transmission do not completely overlap.

e) Reference signals (for example, DMRS) corresponding to the at least two first uplink transmissions are orthogonal.

The orthogonality may be understood as using the same time domain or frequency domain resources, but using different code domain resources, or using different time domain or frequency domain resources.

f) Reference signals corresponding to the at least two first uplink transmissions overlap, or have an inclusion relationship.

For example, time domain resources of a reference signal of one or a specific first uplink transmission include time domain resources of a reference signal of another or more first uplink transmissions.

For example, frequency domain resources of a reference signal of one or a specific first uplink transmission include frequency domain resources of a reference signal of another or more first uplink transmissions.

g) The number of resources corresponding to the at least two first uplink transmissions are all less than or equal to a specific value.

For example, the number of time domain resources corresponding to the at least two first uplink transmissions is less than or equal to value 1.

For example, the number of frequency domain resources corresponding to the at least two first uplink transmissions is less than or equal to value 2.

Alternatively, the number of resources corresponding to the at least two first uplink transmissions are all greater than or equal to a specific value.

For example, the number of time domain resources corresponding to the at least two first uplink transmissions is less than or equal to value 3.

For example, the number of frequency domain resources corresponding to the at least two first uplink transmissions is less than or equal to value 4.
h) TBSs corresponding to the at least two first uplink transmissions are all less than or equal to a specific value.
i) TBSs corresponding to the at least two first uplink transmissions are the same or a TBS difference between them is not greater than a specific value.
j) MCSs corresponding to the at least two first uplink transmissions are all less than or equal to a specific value.
k) The at least two first uplink transmissions all use a same MCS or a same MCS table.
l) Code rates corresponding to the at least two first uplink transmissions are all less than or equal to a specific value.
m) The at least two first uplink transmissions all use a same code rate or a code rate difference between them is not greater than a specific value.
n) The at least two first uplink transmissions all correspond to a specific modulation scheme.
o) Modulation orders corresponding to the at least two first uplink transmissions are all less than or equal to a specific value.
p) The at least two first uplink transmissions all use a specific waveform (for example, DFT-S-OFDM).
q) Resource allocation modes corresponding to the at least two first uplink transmissions are type (type)1 or type2; for example, all are type1 or all are type2.
r) The frequency domain resources corresponding to the at least two first uplink transmissions are all continuous in frequency domain.

For example, interlace indexes (interlace index) corresponding to the at least two first uplink transmissions are continuous, or RBs corresponding to the at least two first uplink transmissions are continuous.
s) SCSs corresponding to the at least two first uplink transmissions are the same, or all are specific SCSs.
t) CPs corresponding to the at least two first uplink transmissions are the same, or all are specific CPs (for example, NCP).
u) DCs corresponding to the at least two first uplink transmissions are all located at a specific position (for example, outside the carrier, outside the resources of the first uplink transmission, or at a specific position indicated or configured by the base station).
v) Priority indexes corresponding to the at least two first uplink transmissions are all a specific priority index (for example, index=1, or index=0).
w) At most X first uplink transmissions in the at least two first uplink transmissions include UCI or specific UCI; or, none include UCI or specific UCI, for example, to avoid or not expect OCC for PUSCH with UCI.
x) None of the at least two first uplink transmissions have a corresponding priority index.
y) The at least two first uplink transmissions all include UCI, or all include specific UCI (for example, HARQ-ACK or SR).

For example, the at least two first uplink transmissions all include UCI, and the number of resources corresponding to the at least two first uplink transmissions cannot exceed a specific value. If the multiplexed PUSCH bandwidth is too large, it may not be possible to ensure that UCI may be received normally, so if PUSCH carries UCI and is to be multiplexed, multiplexing is supported only when the bandwidth is relatively small.

Alternatively, the first uplink transmissions all do not include UCI. For example, the at least two first uplink transmissions all do not include UCI, and the number of resources corresponding to the at least two first uplink transmissions can exceed a specific value.
z) The number of resources corresponding to the at least two first uplink transmissions are all even numbers or SF numbers, or a multiple of SF, where SF is a multiplexing factor or the number of multiplexed users.
aa) The at least two first uplink transmissions are all indicated or configured or activated with the first information by the base station.
bb) The at least two first uplink transmissions are all indicated or configured or activated by the base station for the UE to determine, based on the first information, the transmission manner of the first uplink transmission.

It should be noted that, corresponding to the above UE reporting, the UE can also report the length, type, index, and the like of the supported first information, such as OCC length, OCC type, or OCC index.

In an implementation, that the UE determines the transmission manner of the first uplink transmission, includes: if a sixth condition is not satisfied, the UE does not determine, based on the first information, the transmission manner of the first uplink transmission (or expressed as, not performing the first uplink transmission based on the first information; or expressed as, the transmission manner of the first uplink transmission determined based on the first information is disabled or invalid; or expressed as, the UE determines the first uplink transmission in other manners; or expressed as, determining the transmission manner of the first uplink transmission based on the first information, but at least part of the first information is a specific value, for example, the number of multiplexed users or the multiplexing factor is 1 or the OCC sequence is all 1s; or expressed as, the UE ignores the first information). In this case, the UE performs transmission of the first uplink transmission (for example, PUSCH). Alternatively, if a fifth condition is satisfied, the UE drops or does not transmit the first uplink transmission.

For example, if the SCSs of the at least two first uplink transmissions are different, the first uplink transmission with a low SCS is not transmitted or the first uplink transmission with a high SCS is transmitted.

For example, if the priority indexes of the at least two first uplink transmissions are different, the first uplink transmission with a low priority index is not transmitted or the first uplink transmission with a high priority index is transmitted.

### Embodiment 3

This embodiment mainly describes uplink transmission of PUSCH carrying UCI.

The UE determines a transmission manner of a first uplink transmission (for example, PUSCH) based on first information, where the first uplink transmission includes UCI, or the first uplink transmission includes UCI and data.

In an implementation, for the first uplink transmission, the determined transmission manner described above is used for transmission.

In an implementation, the first information is only for data of the first uplink transmission, and a transmission manner of the data of the first uplink transmission is determined based on the first information. For example, the first information is only for or applied to the data of the first uplink transmission.

In an implementation, the first information at least includes first information for the UCI of the first uplink transmission, first information corresponding to the UCI is determined, and a transmission manner of the UCI is determined based on the first information. For example, the first information is at least for or applied to the UCI.

In an implementation, the first information at least includes first information for the UCI of the first uplink transmission and first information for the data of the first uplink transmission, first information corresponding to or applied to the UCI part and first information corresponding to or applied to the data part are determined, and a transmission manner of the UCI and a transmission manner of the data are determined based on the corresponding first information.

In this case, the first information includes the first information corresponding to or applied to the UCI part and the first information corresponding to or applied to the data part.

In an implementation, the first information corresponding to the UCI part and the first information corresponding to the data part are at least partially different.

In an implementation, the base station may indicate or configure at least one of the following, and the UE determines the transmission manner of the first uplink transmission based on the indication of the base station:
whether the transmission manner for the first uplink transmission including UCI is determined based on the first information or by using the first information or by ignoring the first information. For example, the base station may indicate or configure whether PUSCH with UCI should use OCC, or whether the UCI part should use OCC; and
whether the transmission manner for the UCI part is determined based on the first information or by using the first information or by ignoring the first information.

In an implementation, if the first uplink transmission includes UCI, the transmission manner for the first uplink transmission or at least the UCI part in the first uplink transmission is determined based on the first information or by not using the first information or by ignoring the first information, or the transmission manner determined based on the first information is deactivated (or expressed as, not performing the first uplink transmission based on the first information; or expressed as, the transmission manner of the first uplink transmission determined based on the first information is disabled or invalid; or expressed as, the UE determines the first uplink transmission in other manners; or expressed as, determining the transmission manner of the first uplink transmission based on the first information, but at least part of the first information is a specific value, for example, the number of multiplexed users or the multiplexing factor is 1 or the OCC sequence is all 1s; or expressed as, the UE ignores the first information). In this case, the UE performs transmission of the first uplink transmission (for example, PUSCH). Alternatively, if the first uplink transmission includes UCI, the UE drops or does not transmit the first uplink transmission.

Further, the first uplink transmission is not expected to overlap with other first uplink transmissions (If UCI is multiplexed, this PUSCH is not expected to apply OCC, this PUSCH should not overlap with other PUSCH).

In an implementation, if the first uplink transmission overlaps with other transmissions (for example, PUCCH, SR, RS, or downlink), then:
it can first be determined whether to transmit the first uplink transmission or the UCI carried on the first uplink transmission, based on the first uplink transmission and other transmissions (that is, first apply the UCI multiplexing rule (apply UCI multiplexing rule)); and then the transmission manner of the first uplink transmission is determined.

For example, the first uplink transmission includes UCI and data, and the UCI part uses the transmission manner corresponding to OCC or the transmission manner determined based on the first information for transmission, or the data part uses the transmission manner corresponding to OCC or the transmission manner determined based on the first information for transmission; and the transmission manners corresponding to OCC or the determined transmission manners used by both are the same.

For example, the first uplink transmission includes UCI and data, and the UCI part does not use the transmission manner corresponding to OCC or is transmitted in other manners, or the data part uses the transmission manner corresponding to OCC or is transmitted using the transmission manner determined based on the first information. The UCI part is transmitted in other manners, for example, the UCI may be directly mapped to transmission resources for transmission, without using the transmission manner corresponding to OCC for transmission.

For example, the first uplink transmission includes UCI and data, and the UCI part uses the transmission manner corresponding to OCC or the transmission manner determined based on the first information for transmission, or the data part uses the transmission manner corresponding to OCC or the transmission manner determined based on the first information for transmission; and the transmission manners corresponding to OCC or the determined transmission manners used by both are different.

### Embodiment 4

If the first uplink transmission uses a first manner for transmission, and the first manner is performing modulation using π/2-BPSK. Then the method further includes: a manner of determining information of the first uplink transmission (during a specific physical layer procedure) is as follows:
for example, a bit string corresponding to the first uplink transmission (data or UCI) is represented as b, and *b*(*i*) is the i-th bit therein. The complex-valued modulated symbol *d*(*i*) is determined based on *b*(*i*). The specific methods are: $d \left(i\right) = \frac{{e}^{j \frac{π}{2} \left(i mod 2\right)}}{\sqrt{2}} \left[\left(1-2b\left(i\right)\right)+j\left(1-2b\left(i\right)\right)\right] ;$ or $\begin{matrix}d \left(i\right) = \frac{{e}^{j \frac{π}{2} \left(k mod 2\right)}}{\sqrt{2}} \left[\left(1-2x\left(k\right)\right)+j\left(1-2x\left(k\right)\right)\right] or d \left(k\right) = \\ \frac{{e}^{j \frac{π}{2} \left(k mod 2\right)}}{\sqrt{2}} \left[\left(1-2x\left(k\right)\right)+j\left(1-2x\left(k\right)\right)\right] ;\end{matrix}$
where
x is determined by b based on OCC or first information, for example, x is a bit string obtained by spreading b through OCC, and *x*(*k*) is the k-th bit therein. Here, k may be i, that is, the same parameter. In this case, the above formula becomes: $d \left(i\right) = \frac{{e}^{j \frac{π}{2} \left(i mod 2\right)}}{\sqrt{2}} \left[\left(1-2x\left(i\right)\right)+j\left(1-2x\left(i\right)\right)\right] ;$ where
k may also be a parameter related to i, such as a value calculated based on i, or i is calculated based on k, which is not limited in this embodiment.

### Embodiment 5:

In this embodiment, an imaginary unit in the OCC base sequence or OCC sequence is represented by i, and i may alternatively be replaced by j.

This embodiment illustrates an uplink transmission based on an OCC sequence within at least one target block by the terminal:
Assuming that 4 UEs are multiplexed on the same 2 contiguous physical resource blocks (Physical Resource Block, PRB), taking an operation of a frequency domain signal on the l-th symbol as an example, the operation of the frequency domain signal on the l-th symbol is as follows:
if the first information indicates that the size of the target block is 1RB=12REs=12SCs, then: the 2 PRBs are divided into 2 target blocks, the 1st target block occupies the 1st PRB, and the 2nd target block occupies the 2nd PRB; and
because the number of multiplexed users is 4, the OCC length is configured to be 4, so an OCC base sequence of length 4 is selected, for example:

| *n* | *wₙ* |
|---|---|
| 0 | [+1 +1 +1 +1] |
| 1 | [+1 *+i* -1 *-i*] |
| 2 | [+1 -1 +1 -1] |
| 3 | [+1 *-i* -1 *+i*] |

UE1 is indicated with OCC index=0, that is, using the OCC base sequence [+1 +1 +1 +1];
UE2 is indicated with OCC index=1, that is, using the OCC base sequence [+1 +i -1 -i];
UE3 is indicated with OCC index=2, that is, using the OCC base sequence [+1 -1 +1 -1]; and
UE4 is indicated with OCC index=3, that is, using the OCC base sequence [+1 -i -1 +i].

Further, the OCC sequences used by the 4 users within the target block are determined as:
UE1 uses the OCC sequence [+1 + 1 + 1 + 1 + 1 + 1 + 1 + 1 + 1 + 1 + 1 + 1];
UE2 uses the OCC sequence [+1 + 1 + 1 + i + i + i - 1 - 1 - 1 - i - i - i];
UE3 uses the OCC sequence [+1 + 1 + 1 - 1 - 1 - 1 + 1 + 1 + 1 - 1 - 1 - 1]; and
UE4 uses the OCC sequence [+1 + 1 + 1 - i - i - i - 1 - 1 - 1 + i + i + i].

Accordingly,
complex-valued modulated symbols transmitted by UE1 in the 1st target block and the 2nd target block are [x1, x2, x3] and [x4, x5, x6], respectively;
complex-valued modulated symbols transmitted by UE2 in the 1st target block and the 2nd target block are [yl, y2, y3] and [y4, y5, y6], respectively;
complex-valued modulated symbols transmitted by UE3 in the 1st target block and the 2nd target block are [z1, z2, z3] and [z4, z5, z6], respectively; and
complex-valued modulated symbols transmitted by UE4 in the 1st target block and the 2nd target block are [w1, w2, w3] and [w4, w5, w6], respectively.

Then, after each target block independently undergoes transmission precoding or pre-DFT transformation, complex-valued symbols mapped in frequency domain within each target block are obtained, and the complex-valued symbols after transmission precoding or pre-DFT transformation corresponding to UE1 to UE4 may be obtained as:
the complex-valued symbols in the 1st target block are: [XX1, YY1, ZZ1, WW1, XX2, YY2, ZZ2, WW2, XX3, YY3, ZZ3, WW3]; and
the complex-valued symbols in the 2nd target block are: [XX4, YY4, ZZ4, WW4, XX5, YY5, ZZ5, WW5, XX6, YY6, ZZ6, WW6].

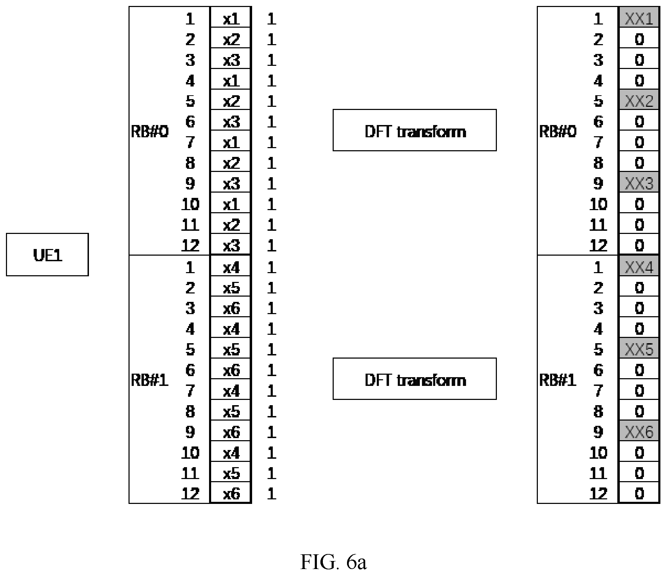

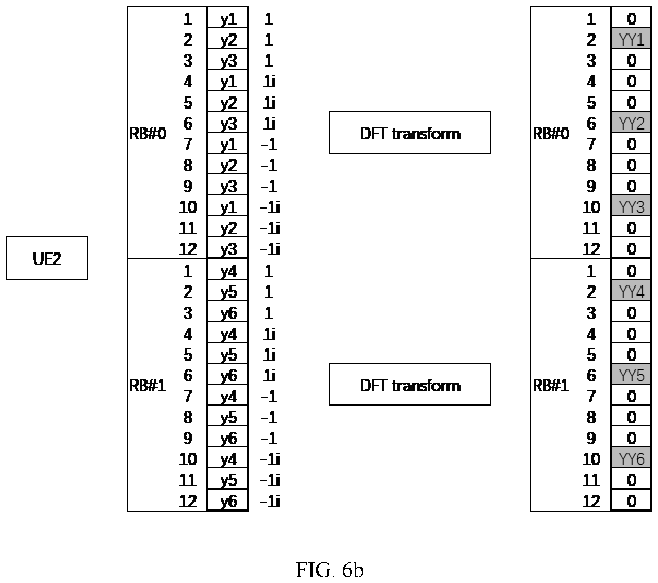

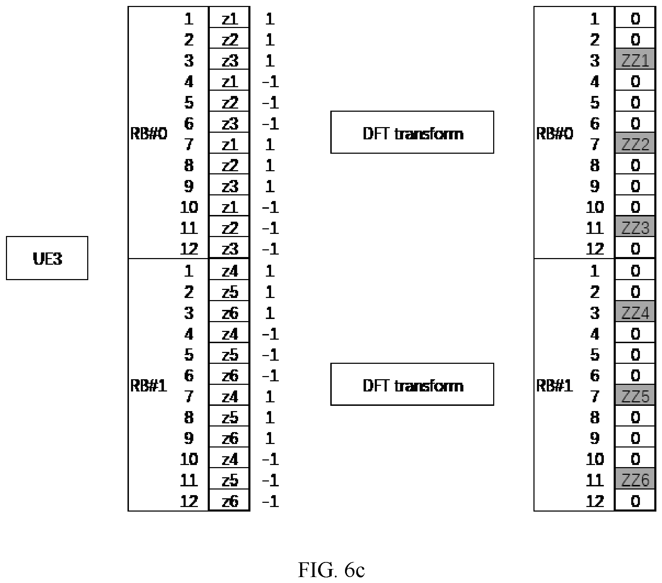

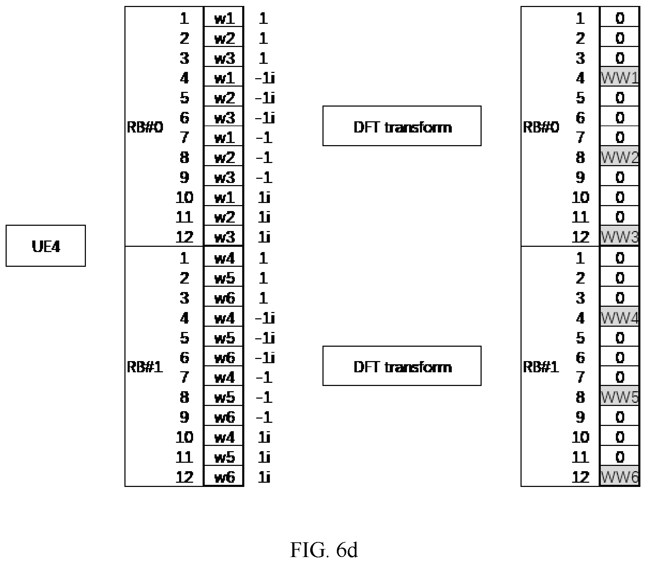

The illustration process is shown in FIGs. 6a, 6b, 6c, and 6d.

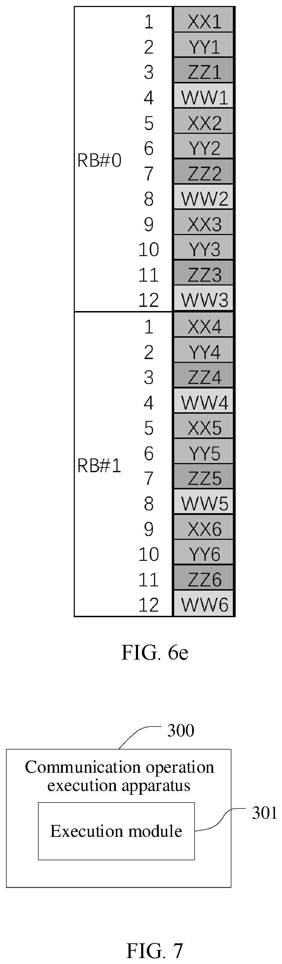

After these 4 UEs undergo the above OCC transmission scheme, frequency domain signals mapped to frequency domain resources on these 2 PRBs on the l-th symbol are shown in FIG. 6e.

Through the above several embodiments, it is possible to solve in what cases OCC can or cannot be used, and how to use OCC if UCI is multiplexed onto PUSCH and OCC needs to be used.

For the communication operation execution method provided in the embodiments of this application, the execution subject can be a communication operation execution apparatus. In the embodiments of this application, the communication operation execution apparatus provided in the embodiments of this application is described by using the communication operation execution method being executed by the communication operation execution apparatus as an example.

Refer to FIG. 7. FIG. 7 is a structural diagram of a communication operation execution apparatus according to an embodiment of this application. A terminal includes the communication operation execution apparatus, and as shown in FIG. 7, the communication operation execution apparatus 300 includes:
an execution module 301, configured to perform a first operation.

The first operation includes at least one of the following:
the terminal determines, based on first information, a transmission manner of a first uplink transmission;
the terminal determines, based on information included in the first uplink transmission, the transmission manner of the first uplink transmission;
the terminal determines, based on a target condition, the transmission manner of the first uplink transmission; and
the terminal performs transmission of a first uplink transmission using a first transmission manner.

The first transmission manner is uplink transmission based on an orthogonal cover code OCC sequence, the first transmission manner is one of transmission manners of the first uplink transmission, and the first information is used for determining an OCC sequence.

Optionally, the target condition includes a first condition, and the determining the transmission manner of the first uplink transmission based on the target condition includes:
in a case that the first condition is satisfied, performing transmission of the first uplink transmission using the first transmission manner.

The first condition includes at least one of the following:
the number of resources corresponding to the first uplink transmission is within a first preset range, where the first preset range is less than or equal to a first preset value, or the first preset range is greater than or equal to a second preset value;
a transport block size TBS corresponding to the first uplink transmission is within a second preset range, where the second preset range is less than or equal to a third preset value;
a modulation and coding scheme MCS corresponding to the first uplink transmission is within a third preset range, where the third preset range is less than or equal to a fourth preset value;
a code rate corresponding to the first uplink transmission is within a fourth preset range, where the fourth preset range is less than or equal to a fifth preset value;
the first uplink transmission uses a target modulation scheme;
a modulation order corresponding to the first uplink transmission is within a fifth preset range, where the fifth preset range is less than or equal to a sixth preset value;
the first uplink transmission uses a target waveform;
a resource allocation mode corresponding to the first uplink transmission is a target type;
a subcarrier spacing SCS corresponding to the first uplink transmission is a target SCS;
a cyclic prefix CP corresponding to the first uplink transmission is a target CP;
a direct current DC subcarrier corresponding to the first uplink transmission is located at a target position;
a priority index corresponding to the first uplink transmission is a target priority index, or there is no corresponding priority index for the first uplink transmission;
the first uplink transmission includes control information, or the first uplink transmission does not include control information;
the number of resources corresponding to the first uplink transmission is an even number or a first parameter or a multiple of the first parameter, where the first parameter is an OCC multiplexing factor or the number of multiplexed terminals;
the terminal is indicated with first information, or is configured with first information, or is activated with first information, where the first information is used for determining the OCC sequence; and
the terminal is indicated with the first transmission manner, or is configured with the first transmission manner, or is activated with the first transmission manner.

Optionally, the apparatus further includes:
a first reporting module, configured to report first indication information to a network-side device, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

Optionally, the target condition includes a second condition, and the determining, based on the target condition, the transmission manner of the first uplink transmission includes any one of the following:
in a case that the second condition is satisfied, transmission of the first uplink transmission is performed using a second transmission manner, or the terminal does not perform the first uplink transmission, where the second transmission manner is different from the first transmission manner; and
in a case that the second condition is satisfied, the terminal performs transmission of the first uplink transmission using the first transmission manner, and an OCC sequence corresponding to the first transmission manner is a preset sequence.

The second condition includes at least one of the following:
the terminal does not satisfy at least one of the first conditions;
the terminal does not satisfy a third condition;
the terminal is indicated not to use the first information, or is configured not to use the first information;
the first information is deactivated for the terminal;
the terminal is indicated not to use the first transmission manner, or is configured not to use the first transmission manner;
the first transmission manner is deactivated for the terminal; and
the terminal is indicated with the second transmission manner, or is configured with the second transmission manner, or is activated with the second transmission manner.

Optionally, the first uplink transmission includes control information, or the first uplink transmission includes control information and target data; and
the determining, based on the first information, the transmission manner of the first uplink transmission includes any one of the following:
at least part of the first information corresponds to the control information, and a transmission manner of the control information is determined based on the at least part of the first information;
at least part of the first information corresponds to the target data, and a transmission manner of the target data is determined based on the at least part of the first information;
the first information includes first part information corresponding to the control information and second part information corresponding to the target data, the transmission manner of the control information is determined based on the first part information, and the transmission manner of the target data is determined based on the second part information; and
the number of pieces of first information is at least two, and the at least two pieces of first information include first information corresponding to the control information and first information corresponding to the target data, the transmission manner of the control information is determined based on the first information corresponding to the control information, and the transmission manner of the target data is determined based on the first information corresponding to the target data.

Optionally, the apparatus further includes:
a first receiving module, configured to receive second indication information sent by a network-side device; where
the second indication information is used to indicate at least one of the following:
   first information corresponding to control information of the first uplink transmission;
   first information corresponding to data of the first uplink transmission;
   whether the first uplink transmission including the control information is transmitted using or not using the first transmission manner;
   whether the first information is used or not used for the first uplink transmission including the control information;
   whether the first information is ignored or not ignored for the first uplink transmission including the control information;
   whether the data of the first uplink transmission is transmitted using or not using the first transmission manner;
   whether the first information is used or not used for determining of a transmission manner for the data of the first uplink transmission;
   whether the first information is ignored or not ignored for determining of a transmission manner for the data of the first uplink transmission;
   whether the control information of the first uplink transmission is transmitted using or not using the first transmission manner;
   whether the first information is used or not used for determining of a transmission manner for the control information of the first uplink transmission; and
   whether the first information is ignored or not ignored for determining of a transmission manner for the control information of the first uplink transmission.

Optionally, the first information corresponding to the control information of the first uplink transmission is at least partially different from the first information corresponding to the data of the first uplink transmission.

Optionally, in a case that the first uplink transmission includes control information, the determining, based on the information included in the first uplink transmission, the transmission manner of the first uplink transmission includes at least one of the following:
the terminal determines that the transmission manner of the control information is a second transmission manner, where the second transmission manner is different from the first transmission manner;
the terminal determines that the transmission manner of the control information is the first transmission manner, and the OCC sequence corresponding to the first transmission manner is a preset sequence;
the terminal determines that the transmission manner of the first uplink transmission is a second transmission manner, where the second transmission manner is different from the first transmission manner;
the terminal determines that the transmission manner of the first uplink transmission is the first transmission manner, and the OCC sequence corresponding to the first transmission manner is a preset sequence;
the terminal determines not to use the first information for transmission of the first uplink transmission or the control information;
the terminal determines to ignore the first information for transmission of the first uplink transmission or the control information;
the terminal determines that the first transmission manner is deactivated for transmission of the first uplink transmission or the control information; and
the terminal does not perform the first uplink transmission.

Optionally, the terminal does not expect the first uplink transmission to overlap with a second uplink transmission, and the second uplink transmission is an uplink transmission other than the first uplink transmission.

Optionally, in a case that the first uplink transmission overlaps with a second uplink transmission, the apparatus further includes a determining module, configured to perform at least one of the following:
determining, based on the first uplink transmission and the second uplink transmission, whether to transmit the first uplink transmission; and
determining, based on the first uplink transmission and the second uplink transmission, control information carried on the first uplink transmission; where
the second uplink transmission is an uplink transmission other than the first uplink transmission.

Optionally, the performing the first uplink transmission using the first transmission manner includes:
determining, based on the OCC sequence, a first transmission symbol corresponding to the first uplink transmission; and
transmitting the first transmission symbol.

Optionally, a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

Optionally, the apparatus further includes:
a second reporting module, configured to report a supported first time to a network-side device, or report third indication information, where the third indication information is used to indicate whether a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

Optionally, the apparatus further includes:
a second receiving module, configured to receive fourth indication information sent by a network-side device; where
the fourth indication information is used to indicate the transmission manner of the first uplink transmission, or the fourth indication information is used to indicate at least one of the target conditions.

Optionally, the fourth indication information is used to indicate part of the first uplink transmission that uses the first transmission manner for transmission; or, the fourth indication information is used to indicate part of the first uplink transmission that uses a second transmission manner for transmission, and the second transmission manner is different from the first transmission manner.

The communication operation execution apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The communication operation execution apparatus provided in this embodiment of this application can implement the processes implemented in the method embodiment in FIG. 4, with the same technical effects achieved. To avoid repetition, details are not described herein again.

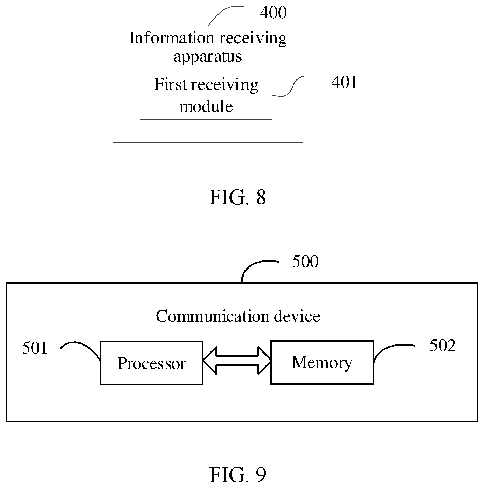

Refer to FIG. 8. FIG. 8 is a structural diagram of an information receiving apparatus according to an embodiment of this application. A network-side device includes the information receiving apparatus, and as shown in FIG. 8, the information receiving apparatus 400 includes:
a first receiving module 401, configured to receive first indication information reported by a terminal, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

Optionally, the apparatus further includes:
a first sending module, configured to send second indication information to the terminal, where
the second indication information is used to indicate at least one of the following:
   first information corresponding to control information of the first uplink transmission;
   first information corresponding to data of the first uplink transmission;
   whether the first uplink transmission including the control information is transmitted using or not using the first transmission manner;
   whether the first information is used or not used for the first uplink transmission including the control information;
   whether the first information is ignored or not ignored for the first uplink transmission including the control information;
   whether the data of the first uplink transmission is transmitted using or not using the first transmission manner;
   whether the first information is used or not used for determining of a transmission manner for the data of the first uplink transmission;
   whether the first information is ignored or not ignored for determining of a transmission manner for the data of the first uplink transmission;
   whether the control information of the first uplink transmission is transmitted using or not using the first transmission manner;
   whether the first information is used or not used for determining of a transmission manner for the control information of the first uplink transmission; and
   whether the first information is ignored or not ignored for determining of a transmission manner for the control information of the first uplink transmission.

Optionally, the apparatus further includes:
a second receiving module, configured to receive a supported first time reported by a terminal, or report third indication information, where the third indication information is used to indicate whether a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

Optionally, the apparatus further includes:
a second sending module, configured to send fourth indication information to the terminal, where
the fourth indication information is used to indicate the transmission manner of the first uplink transmission, or the fourth indication information is used to indicate at least one of target conditions.

Optionally, the apparatus further includes:
a determining module, configured to: in a case that the terminal does not report the supported first time, or does not report the third indication information, determine that the first time is 0, or that the time interval between the first uplink transmission and the reference point does not include the first time.

The first time corresponds to the transmission manner of the first uplink transmission, or the first time is determined based on the transmission manner of the first uplink transmission, the reference point is a time in which downlink control information DCI scheduling the first uplink transmission is located, and the third indication information is used to indicate whether the time interval between the first uplink transmission and the reference point includes the first time.

The information receiving apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The information receiving apparatus provided in this embodiment of this application is capable of implementing the processes implemented in the method embodiments in FIG. 5, with the same technical effects achieved. To avoid repetition, details are not described herein again.

Optionally, as shown in FIG. 9, an embodiment of this application further provides a communication device 500, including a processor 501 and a memory 502. A program or instructions capable of running on the processor 501 are stored in the memory 502. For example, when the communication device 500 is a terminal and when the program or the instructions are executed by the processor 501, the steps of the foregoing embodiments of the communication operation execution method applied to the terminal are implemented, with the same technical effects achieved. To avoid repetition, details are not described herein again. When the communication device 500 is a network-side device and when the program or the instructions are executed by the processor 501, the steps of the foregoing embodiments of the information receiving method applied to the network-side device are implemented, with the same technical effects achieved. To avoid repetition, details are not described herein again.

An embodiment of this application further provides a terminal, which includes a processor and a communication interface, where the communication interface is coupled to the processor, and the processor is configured to run a program or instructions to implement the steps of the method embodiments shown in FIG. 4. The terminal embodiment corresponds to the foregoing terminal side method embodiment, and the implementation processes and implementations of the foregoing method embodiments can be applied to the terminal embodiments, with the same technical effects achieved.

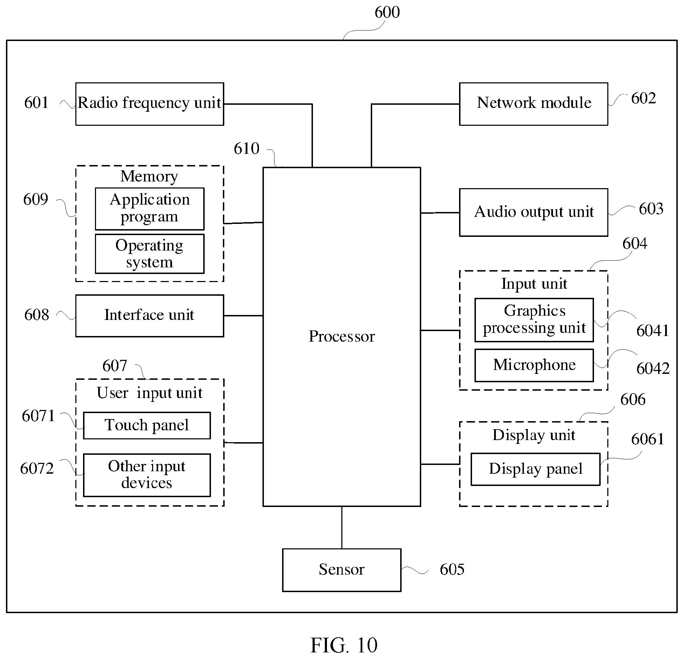

Specifically, FIG. 10 is a schematic diagram of a hardware structure of a terminal implementing an embodiment of this application.

The terminal 600 includes but is not limited to at least part of components such as a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) supplying power to the components, and the power supply may be logically connected to the processor 610 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It can be understood that in this embodiment of this application, the input unit 604 may include a graphics processing unit (Graphics Processing Unit, GPU) 6041 and a microphone 6042. The GPU 6041 processes image data of a still picture or video obtained by an image capture apparatus (such as a camera) in a video capture mode or an image capture mode. The display unit 606 may include a display panel 6061. The display panel 6061 may be configured in a form of a liquid crystal display, an organic light-emitting diode display, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 601 sends the downlink data to the processor 610 for processing; and the radio frequency unit 601 also sends uplink data to the network-side device. Generally, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may mainly include a first storage area for storing programs or instructions and a second storage area for storing data, where the first storage area may store an operating system, an application program or instructions required by at least one function (for example, an audio playing function and an image playing function), and the like. The memory 609 may include a volatile memory or a non-volatile memory, or the memory 609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 609 described in the embodiments of this application is intended to include but is not limited to these and any other suitable types of memories.

The processor 610 may include one or more processing units. Optionally, the processor 610 may integrate an application processor and a modem processor. The application processor primarily processes operations involving an operating system, user interface, application program, or the like. The modem processor primarily processes radio communication signals, for example, being a baseband processor. It should be understood that alternatively, the modem processor may not be integrated into the processor 610.

The processor 610 is configured to:
perform a first operation.

The first operation includes at least one of the following:
the terminal determines, based on first information, a transmission manner of a first uplink transmission;
the terminal determines, based on information included in the first uplink transmission, the transmission manner of the first uplink transmission;
the terminal determines, based on a target condition, the transmission manner of the first uplink transmission; and
the terminal performs transmission of a first uplink transmission using a first transmission manner.

The first transmission manner is uplink transmission based on an orthogonal cover code OCC sequence, the first transmission manner is one of transmission manners of the first uplink transmission, and the first information is used for determining an OCC sequence.

Optionally, the target condition includes a first condition, and the determining the transmission manner of the first uplink transmission based on the target condition includes:
in a case that the first condition is satisfied, performing transmission of the first uplink transmission using the first transmission manner; where
the first condition includes at least one of the following:
   the number of resources corresponding to the first uplink transmission is within a first preset range, where the first preset range is less than or equal to a first preset value, or the first preset range is greater than or equal to a second preset value;
   a transport block size TBS corresponding to the first uplink transmission is within a second preset range, where the second preset range is less than or equal to a third preset value;
   a modulation and coding scheme MCS corresponding to the first uplink transmission is within a third preset range, where the third preset range is less than or equal to a fourth preset value;
   a code rate corresponding to the first uplink transmission is within a fourth preset range, where the fourth preset range is less than or equal to a fifth preset value;
   the first uplink transmission uses a target modulation scheme;
   a modulation order corresponding to the first uplink transmission is within a fifth preset range, where the fifth preset range is less than or equal to a sixth preset value;
   the first uplink transmission uses a target waveform;
   a resource allocation mode corresponding to the first uplink transmission is a target type;
   a subcarrier spacing SCS corresponding to the first uplink transmission is a target SCS;
   a cyclic prefix CP corresponding to the first uplink transmission is a target CP;
   a direct current DC subcarrier corresponding to the first uplink transmission is located at a target position;
   a priority index corresponding to the first uplink transmission is a target priority index, or there is no corresponding priority index for the first uplink transmission;
   the first uplink transmission includes control information, or the first uplink transmission does not include control information;
   the number of resources corresponding to the first uplink transmission is an even number or a first parameter or a multiple of the first parameter, where the first parameter is an OCC multiplexing factor or the number of multiplexed terminals;
   the terminal is indicated with first information, or is configured with first information, or is activated with first information, where the first information is used for determining the OCC sequence; and
   the terminal is indicated with the first transmission manner, or is configured with the first transmission manner, or is activated with the first transmission manner.

Optionally, the radio frequency unit 601 is configured to report first indication information to a network-side device, where the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

Optionally, the target condition includes a second condition, and the determining, based on the target condition, the transmission manner of the first uplink transmission includes any one of the following:
in a case that the second condition is satisfied, transmission of the first uplink transmission is performed using a second transmission manner, or the terminal does not perform the first uplink transmission, where the second transmission manner is different from the first transmission manner; and
in a case that the second condition is satisfied, the terminal performs transmission of the first uplink transmission using the first transmission manner, and an OCC sequence corresponding to the first transmission manner is a preset sequence.

The second condition includes at least one of the following:
the terminal does not satisfy at least one of the first conditions;
the terminal does not satisfy a third condition;
the terminal is indicated not to use the first information, or is configured not to use the first information;
the first information is deactivated for the terminal;
the terminal is indicated not to use the first transmission manner, or is configured not to use the first transmission manner;
the first transmission manner is deactivated for the terminal; and
the terminal is indicated with the second transmission manner, or is configured with the second transmission manner, or is activated with the second transmission manner.

Optionally, the first uplink transmission includes control information, or the first uplink transmission includes control information and target data; and
the determining, based on the first information, the transmission manner of the first uplink transmission includes any one of the following:
at least part of the first information corresponds to the control information, and a transmission manner of the control information is determined based on the at least part of the first information;
at least part of the first information corresponds to the target data, and a transmission manner of the target data is determined based on the at least part of the first information;
the first information includes first part information corresponding to the control information and second part information corresponding to the target data, the transmission manner of the control information is determined based on the first part information, and the transmission manner of the target data is determined based on the second part information; and
the number of pieces of first information is at least two, and the at least two pieces of first information include first information corresponding to the control information and first information corresponding to the target data, the transmission manner of the control information is determined based on the first information corresponding to the control information, and the transmission manner of the target data is determined based on the first information corresponding to the target data.

Optionally, the radio frequency unit 601 is configured to receive second indication information sent by the network-side device.

The second indication information is used to indicate at least one of the following:
first information corresponding to control information of the first uplink transmission;
first information corresponding to data of the first uplink transmission;
whether the first uplink transmission including the control information is transmitted using or not using the first transmission manner;
whether the first information is used or not used for the first uplink transmission including the control information;
whether the first information is ignored or not ignored for the first uplink transmission including the control information;
whether the data of the first uplink transmission is transmitted using or not using the first transmission manner;
whether the first information is used or not used for determining of a transmission manner for the data of the first uplink transmission;
whether the first information is ignored or not ignored for determining of a transmission manner for the data of the first uplink transmission;
whether the control information of the first uplink transmission is transmitted using or not using the first transmission manner;
whether the first information is used or not used for determining of a transmission manner for the control information of the first uplink transmission; and
whether the first information is ignored or not ignored for determining of a transmission manner for the control information of the first uplink transmission.

Optionally, the first information corresponding to the control information of the first uplink transmission is at least partially different from the first information corresponding to the data of the first uplink transmission.

Optionally, in a case that the first uplink transmission includes control information, the determining, based on the information included in the first uplink transmission, the transmission manner of the first uplink transmission includes at least one of the following:
the terminal determines that the transmission manner of the control information is a second transmission manner, where the second transmission manner is different from the first transmission manner;
the terminal determines that the transmission manner of the control information is the first transmission manner, and the OCC sequence corresponding to the first transmission manner is a preset sequence;
the terminal determines that the transmission manner of the first uplink transmission is a second transmission manner, where the second transmission manner is different from the first transmission manner;
the terminal determines that the transmission manner of the first uplink transmission is the first transmission manner, and the OCC sequence corresponding to the first transmission manner is a preset sequence;
the terminal determines not to use the first information for transmission of the first uplink transmission or the control information;
the terminal determines to ignore the first information for transmission of the first uplink transmission or the control information;
the terminal determines that the first transmission manner is deactivated for transmission of the first uplink transmission or the control information; and
the terminal does not perform the first uplink transmission.

Optionally, the terminal does not expect the first uplink transmission to overlap with a second uplink transmission, and the second uplink transmission is an uplink transmission other than the first uplink transmission.

Optionally, in a case that the first uplink transmission overlaps with a second uplink transmission, the apparatus further includes a determining module, configured to perform at least one of the following:
determining, based on the first uplink transmission and the second uplink transmission, whether to transmit the first uplink transmission; and
determining, based on the first uplink transmission and the second uplink transmission, control information carried on the first uplink transmission; where
the second uplink transmission is an uplink transmission other than the first uplink transmission.

Optionally, the performing the first uplink transmission using the first transmission manner includes:
determining, based on the OCC sequence, a first transmission symbol corresponding to the first uplink transmission; and
transmitting the first transmission symbol.

Optionally, a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

Optionally, the radio frequency unit 601 is configured to report a supported first time to a network-side device, or report third indication information, where the third indication information is used to indicate whether a time interval between the first uplink transmission and a reference point includes a first time, the first time corresponds to the transmission manner of the first uplink transmission, or the first time is determined based on the transmission manner of the first uplink transmission, and the reference point is a time in which downlink control information DCI scheduling the first uplink transmission is located.

Optionally, the radio frequency unit 601 is configured to receive fourth indication information sent by the network-side device.

The fourth indication information is used to indicate the transmission manner of the first uplink transmission, or the fourth indication information is used to indicate at least one of the target conditions.

Optionally, the fourth indication information is used to indicate part of the first uplink transmission that uses the first transmission manner for transmission; or, the fourth indication information is used to indicate part of the first uplink transmission that uses a second transmission manner for transmission, and the second transmission manner is different from the first transmission manner.

It can be understood that for the implementation processes of the implementations mentioned in this embodiment, reference may be made to the related descriptions of the method embodiment in FIG. 4, with the same or corresponding technical effects achieved. To avoid repetition, details are not described herein again.

Specifically, the terminal in this embodiment of this application further includes: instructions or a program stored in the memory 609 and capable of running on the processor 610. The processor 610 invokes the instructions or program in the memory 609 to execute the method executed by the modules shown in FIG. 7, with the same technical effects achieved. To avoid repetition, details are not described herein again.

An embodiment of this application further provides a network-side device, which includes a processor and a communication interface, where the communication interface is coupled to the processor, and the processor is configured to run a program or instructions to implement the steps of the method embodiments shown in FIG. 5. The network-side device embodiment corresponds to the foregoing information receiving method embodiment, and the implementation processes and implementations of the foregoing method embodiments can be applied to the network-side device embodiment, with the same technical effects achieved.

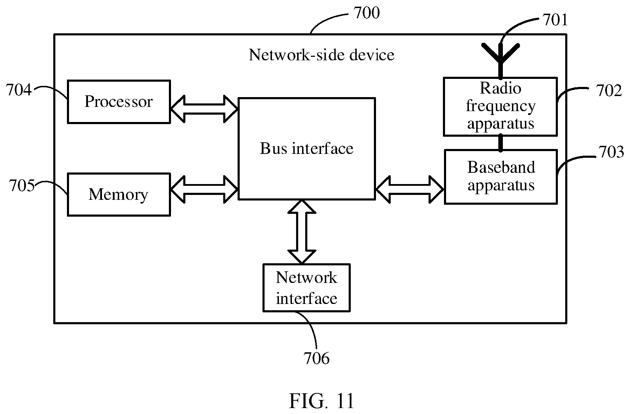

Specifically, an embodiment of this application further provides a network-side device. As shown in FIG. 11, the network-side device 700 includes an antenna 701, a radio frequency apparatus 702, a baseband apparatus 703, a processor 704, and memory 705. The antenna 701 is connected to the radio frequency apparatus 702. In an uplink direction, the radio frequency apparatus 702 receives information by using the antenna 701, and sends the received information to the baseband apparatus 703 for processing. Downlink, the baseband apparatus 703 processes to-be-sent information, and sends the information to the radio frequency apparatus 702; and the radio frequency apparatus 702 processes the received information and then sends the information out through the antenna 701.

The method executed by the network-side device in the foregoing embodiments may be implemented on the baseband apparatus 703. The baseband apparatus 703 includes a baseband processor.

The baseband apparatus 703 may include, for example, at least one baseband board, where a plurality of chips are disposed on the baseband board. As shown in FIG. 11, one of the chips is, for example, the baseband processor, and connected to the memory 705 through a bus interface, to invoke the program in the memory 705 to perform the operations of the network-side device shown in the foregoing method embodiment.

The network-side device may further include a network interface 706, where the interface is, for example, a common public radio interface (Common Public Radio Interface, CPRI).

Specifically, the network-side device 700 according to this embodiment of this application further includes instructions or programs stored in the memory 705 and capable of running on the processor 704, and the processor 704 calls the instructions or programs in the memory 705 to execute the methods performed by the modules shown in FIG. 8, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the communication operation execution method or the information receiving method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing embodiments of the communication operation execution method or the information receiving method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the communication operation execution method or the information receiving method, with the same technical effects achieved. To avoid repetition, details are not repeated herein.

An embodiment of this application further provides a communication operation execution system, including a terminal and a network-side device, where the terminal can be configured to execute the steps of the foregoing communication operation execution method applied to the terminal, and the network-side device can be configured to execute the steps of the information receiving method applied to the network-side device.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. A communication operation execution method, comprising:
performing, by a terminal, a first operation, wherein
the first operation comprises at least one of the following:
the terminal determines, based on first information, a transmission manner of a first uplink transmission;
the terminal determines, based on information comprised in the first uplink transmission, the transmission manner of the first uplink transmission;
the terminal determines, based on a target condition, the transmission manner of the first uplink transmission; and
the terminal performs transmission of the first uplink transmission using a first transmission manner; wherein
the first transmission manner is uplink transmission based on an orthogonal cover code OCC sequence, the first transmission manner is one of transmission manners of the first uplink transmission, and the first information is used for determining an OCC sequence.

2. The method according to claim 1, wherein the target condition comprises a first condition, and that the terminal determines the transmission manner of the first uplink transmission based on the target condition comprises:
in a case that the first condition is satisfied, the terminal performs transmission of the first uplink transmission using the first transmission manner; wherein
the first condition comprises at least one of the following:
the number of resources corresponding to the first uplink transmission is within a first preset range, wherein the first preset range is less than or equal to a first preset value, or the first preset range is greater than or equal to a second preset value;
a transport block size TBS corresponding to the first uplink transmission is within a second preset range, wherein the second preset range is less than or equal to a third preset value;
a modulation and coding scheme MCS corresponding to the first uplink transmission is within a third preset range, wherein the third preset range is less than or equal to a fourth preset value;
a code rate corresponding to the first uplink transmission is within a fourth preset range, wherein the fourth preset range is less than or equal to a fifth preset value;
the first uplink transmission uses a target modulation scheme;
a modulation order corresponding to the first uplink transmission is within a fifth preset range, wherein the fifth preset range is less than or equal to a sixth preset value;
the first uplink transmission uses a target waveform;
a resource allocation mode corresponding to the first uplink transmission is a target type;
a subcarrier spacing SCS corresponding to the first uplink transmission is a target SCS;
a cyclic prefix CP corresponding to the first uplink transmission is a target CP;
a direct current DC subcarrier corresponding to the first uplink transmission is located at a target position;
a priority index corresponding to the first uplink transmission is a target priority index, or there is no corresponding priority index for the first uplink transmission;
the first uplink transmission comprises control information, or the first uplink transmission does not comprise control information;
the number of resources corresponding to the first uplink transmission is an even number or a first parameter or a multiple of the first parameter, wherein the first parameter is an OCC multiplexing factor or the number of multiplexed terminals;
the terminal is indicated with first information, or is configured with first information, or is activated with first information, wherein the first information is used for determining the OCC sequence; and
the terminal is indicated with the first transmission manner, or is configured with the first transmission manner, or is activated with the first transmission manner.

3. The method according to claim 1 or 2, wherein the method further comprises:
reporting, by the terminal, first indication information to a network-side device, wherein the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

4. The method according to any one of claims 1 to 3, wherein the target condition comprises a second condition, and that the terminal determines, based on the target condition, the transmission manner of the first uplink transmission comprises any one of the following:
in a case that the second condition is satisfied, the terminal performs transmission of the first uplink transmission using a second transmission manner, or the terminal does not perform the first uplink transmission, wherein the second transmission manner is different from the first transmission manner; and
in a case that the second condition is satisfied, the terminal performs transmission of the first uplink transmission using the first transmission manner, and an OCC sequence corresponding to the first transmission manner is a preset sequence; wherein
the second condition comprises at least one of the following:
the terminal does not satisfy the first condition;
the terminal does not satisfy a third condition;
the terminal is indicated not to use the first information, or is configured not to use the first information;
the first information is deactivated for the terminal;
the terminal is indicated not to use the first transmission manner, or is configured not to use the first transmission manner;
the first transmission manner is deactivated for the terminal; and
the terminal is indicated with the second transmission manner, or is configured with the second transmission manner, or is activated with the second transmission manner.

5. The method according to any one of claims 1 to 4, wherein the first uplink transmission comprises control information, or the first uplink transmission comprises control information and target data; and
that the terminal determines, based on the first information, the transmission manner of the first uplink transmission comprises any one of the following:
at least part of the first information corresponds to the control information, and the terminal determines, based on the at least part of the first information, a transmission manner of the control information;
at least part of the first information corresponds to the target data, and the terminal determines, based on the at least part of the first information, a transmission manner of the target data;
the first information comprises first part information corresponding to the control information and second part information corresponding to the target data, the terminal determines the transmission manner of the control information based on the first part information, and determines the transmission manner of the target data based on the second part information; and
the number of pieces of first information is at least two, and the at least two pieces of first information comprises first information corresponding to the control information and first information corresponding to the target data; and the terminal determines the transmission manner of the control information based on the first information corresponding to the control information, and determines the transmission manner of the target data based on the first information corresponding to the target data.

6. The method according to any one of claims 1 to 5, wherein the method further comprises:
receiving, by the terminal, second indication information sent by a network-side device; wherein
the second indication information is used to indicate at least one of the following:
first information corresponding to control information of the first uplink transmission;
first information corresponding to data of the first uplink transmission;
whether the first uplink transmission comprising the control information is transmitted using or not using the first transmission manner;
whether the first information is used or not used for the first uplink transmission comprising the control information;
whether the first information is ignored or not ignored for the first uplink transmission comprising the control information;
whether the data of the first uplink transmission is transmitted using or not using the first transmission manner;
whether the first information is used or not used for determining of a transmission manner for the data of the first uplink transmission;
whether the first information is ignored or not ignored for determining of a transmission manner for the data of the first uplink transmission;
whether the control information of the first uplink transmission is transmitted using or not using the first transmission manner;
whether the first information is used or not used for determining of a transmission manner for the control information of the first uplink transmission; and
whether the first information is ignored or not ignored for determining of a transmission manner for the control information of the first uplink transmission.

7. The method according to any one of claims 1 to 6, wherein the first information corresponding to the control information of the first uplink transmission is at least partially different from the first information corresponding to the data of the first uplink transmission.

8. The method according to any one of claims 1 to 7, wherein in a case that the first uplink transmission comprises control information, that the terminal determines, based on the information comprised in the first uplink transmission, the transmission manner of the first uplink transmission comprises at least one of the following:
the terminal determines that the transmission manner of the control information is a second transmission manner, wherein the second transmission manner is different from the first transmission manner;
the terminal determines that the transmission manner of the control information is the first transmission manner, and the OCC sequence corresponding to the first transmission manner is a preset sequence;
the terminal determines that the transmission manner of the first uplink transmission is a second transmission manner, wherein the second transmission manner is different from the first transmission manner;
the terminal determines that the transmission manner of the first uplink transmission is the first transmission manner, and the OCC sequence corresponding to the first transmission manner is a preset sequence;
the terminal determines not to use the first information for transmission of the first uplink transmission or the control information;
the terminal determines to ignore the first information for transmission of the first uplink transmission or the control information;
the terminal determines that the first transmission manner is deactivated for transmission of the first uplink transmission or the control information; and
the terminal does not perform the first uplink transmission.

9. The method according to any one of claims 1 to 8, wherein the terminal does not expect the first uplink transmission to overlap with a second uplink transmission, and the second uplink transmission is an uplink transmission other than the first uplink transmission.

10. The method according to any one of claims 1 to 8, wherein in a case that the first uplink transmission overlaps with a second uplink transmission, before the terminal determines, based on the first information, the transmission manner of the first uplink transmission, the method comprises at least one of the following:
determining, by the terminal based on the first uplink transmission and the second uplink transmission, whether to transmit the first uplink transmission; and
determining, by the terminal based on the first uplink transmission and the second uplink transmission, control information carried on the first uplink transmission; wherein
the second uplink transmission is an uplink transmission other than the first uplink transmission.

11. The method according to any one of claims 1 to 10, wherein that the terminal performs the first uplink transmission using the first transmission manner comprises:
determining, by the terminal based on the OCC sequence, a first transmission symbol corresponding to the first uplink transmission; and
transmitting, by the terminal, the first transmission symbol.

12. The method according to any one of claims 1 to 11, wherein a time interval between the first uplink transmission and a reference point comprises a first time, the first time corresponds to the transmission manner of the first uplink transmission, or the first time is determined based on the transmission manner of the first uplink transmission, and the reference point is a time in which downlink control information DCI scheduling the first uplink transmission is located.

13. The method according to any one of claims 1 to 12, wherein the method further comprises:
reporting, by the terminal, a supported first time to a network-side device, or reporting third indication information, wherein the third indication information is used to indicate whether a time interval between the first uplink transmission and a reference point comprises a first time, the first time corresponds to the transmission manner of the first uplink transmission, or the first time is determined based on the transmission manner of the first uplink transmission, and the reference point is a time in which downlink control information DCI scheduling the first uplink transmission is located.

14. The method according to any one of claims 1 to 13, wherein the method further comprises:
receiving, by the terminal, fourth indication information sent by a network-side device; wherein
the fourth indication information is used to indicate the transmission manner of the first uplink transmission, or the fourth indication information is used to indicate at least one of the target conditions.

15. The method according to claim 14, wherein the fourth indication information is used to indicate part of the first uplink transmission that uses the first transmission manner for transmission; or, the fourth indication information is used to indicate part of the first uplink transmission that uses a second transmission manner for transmission, and the second transmission manner is different from the first transmission manner.

16. An information receiving method, comprising:
receiving, by a network-side device, first indication information reported by a terminal, wherein the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

17. The method according to claim 16, wherein the method further comprises:
sending, by the network-side device, second indication information to the terminal; wherein
the second indication information is used to indicate at least one of the following:
first information corresponding to control information of the first uplink transmission;
first information corresponding to data of the first uplink transmission;
whether the first uplink transmission comprising the control information is transmitted using or not using the first transmission manner;
whether the first information is used or not used for the first uplink transmission comprising the control information;
whether the first information is ignored or not ignored for the first uplink transmission comprising the control information;
whether the data of the first uplink transmission is transmitted using or not using the first transmission manner;
whether the first information is used or not used for determining of a transmission manner for the data of the first uplink transmission;
whether the first information is ignored or not ignored for determining of a transmission manner for the data of the first uplink transmission;
whether the control information of the first uplink transmission is transmitted using or not using the first transmission manner;
whether the first information is used or not used for determining of a transmission manner for the control information of the first uplink transmission; and
whether the first information is ignored or not ignored for determining of a transmission manner for the control information of the first uplink transmission.

18. The method according to claim 16 or 17, wherein the method further comprises:
receiving, by the network-side device, a supported first time reported by the terminal, or receiving third indication information, wherein the third indication information is used to indicate whether a time interval between the first uplink transmission and a reference point comprises a first time, the first time corresponds to the transmission manner of the first uplink transmission, or the first time is determined based on the transmission manner of the first uplink transmission, and the reference point is a time in which downlink control information DCI scheduling the first uplink transmission is located.

19. The method according to any one of claims 16 to 18, wherein the method further comprises:
sending, by the network-side device, fourth indication information to the terminal; wherein
the fourth indication information is used to indicate the transmission manner of the first uplink transmission, or the fourth indication information is used to indicate at least one of target conditions.

20. The method according to any one of claims 16 to 19, wherein the method further comprises:
in a case that the terminal does not report the supported first time, or does not report the third indication information, determining, by the network-side device, that the first time is 0, or that the time interval between the first uplink transmission and the reference point does not comprise the first time; wherein
the first time corresponds to the transmission manner of the first uplink transmission, or the first time is determined based on the transmission manner of the first uplink transmission, the reference point is a time in which downlink control information DCI scheduling the first uplink transmission is located, and the third indication information is used to indicate whether the time interval between the first uplink transmission and the reference point comprises the first time.

21. A communication operation execution apparatus, wherein the apparatus comprises:
an execution module, configured to perform a first operation, wherein
the first operation comprises at least one of the following:
the terminal determines, based on first information, a transmission manner of a first uplink transmission;
the terminal determines, based on information comprised in the first uplink transmission, the transmission manner of the first uplink transmission;
the terminal determines, based on a target condition, the transmission manner of the first uplink transmission; and
the terminal performs transmission of the first uplink transmission using a first transmission manner; wherein
the first transmission manner is uplink transmission based on an orthogonal cover code OCC sequence, the first transmission manner is one of transmission manners of the first uplink transmission, and the first information is used for determining an OCC sequence.

22. The apparatus according to claim 21, wherein the target condition comprises a first condition, and the determining the transmission manner of the first uplink transmission based on the target condition comprises:
in a case that the first condition is satisfied, performing transmission of the first uplink transmission using the first transmission manner; wherein
the first condition comprises at least one of the following:
the number of resources corresponding to the first uplink transmission is within a first preset range, wherein the first preset range is less than or equal to a first preset value, or the first preset range is greater than or equal to a second preset value;
a transport block size TBS corresponding to the first uplink transmission is within a second preset range, wherein the second preset range is less than or equal to a third preset value;
a modulation and coding scheme MCS corresponding to the first uplink transmission is within a third preset range, wherein the third preset range is less than or equal to a fourth preset value;
a code rate corresponding to the first uplink transmission is within a fourth preset range, wherein the fourth preset range is less than or equal to a fifth preset value;
the first uplink transmission uses a target modulation scheme;
a modulation order corresponding to the first uplink transmission is within a fifth preset range, wherein the fifth preset range is less than or equal to a sixth preset value;
the first uplink transmission uses a target waveform;
a resource allocation mode corresponding to the first uplink transmission is a target type;
a subcarrier spacing SCS corresponding to the first uplink transmission is a target SCS;
a cyclic prefix CP corresponding to the first uplink transmission is a target CP;
a direct current DC subcarrier corresponding to the first uplink transmission is located at a target position;
a priority index corresponding to the first uplink transmission is a target priority index, or there is no corresponding priority index for the first uplink transmission;
the first uplink transmission comprises control information, or the first uplink transmission does not comprise control information;
the number of resources corresponding to the first uplink transmission is an even number or a first parameter or a multiple of the first parameter, wherein the first parameter is an OCC multiplexing factor or the number of multiplexed terminals;
the terminal is indicated with first information, or is configured with first information, or is activated with first information, wherein the first information is used for determining the OCC sequence; and
the terminal is indicated with the first transmission manner, or is configured with the first transmission manner, or is activated with the first transmission manner.

23. The apparatus according to claim 21 or 22, wherein the apparatus further comprises:
a first reporting module, configured to report first indication information to a network-side device, wherein the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

24. An information receiving apparatus, wherein the apparatus comprises:
a first receiving module, configured to receive first indication information reported by a terminal, wherein the first indication information is used to indicate at least one of the following:
the number of resources, supported by the terminal, corresponding to uplink transmission that is performed using the first transmission manner;
a TBS, supported by the terminal, corresponding to uplink transmission that is performed using the first transmission manner;
an MCS, supported by the terminal, corresponding to uplink transmission that is performed using the first transmission manner;
a code rate, supported by the terminal, corresponding to uplink transmission that is performed using the first transmission manner;
a modulation scheme, supported by the terminal, corresponding to uplink transmission that is performed using the first transmission manner;
a modulation order, supported by the terminal, corresponding to uplink transmission that is performed using the first transmission manner;
a resource allocation mode, supported by the terminal, corresponding to uplink transmission that is performed using the first transmission manner;
a resource requirement, supported by the terminal, corresponding to uplink transmission that is performed using the first transmission manner;
an SCS, supported by the terminal, corresponding to uplink transmission that is performed using the first transmission manner; and
a CP, supported by the terminal, corresponding to uplink transmission that is performed using the first transmission manner.

25. A terminal, comprising a processor and a memory, wherein the memory stores a program or instructions capable of running on the processor, and when the program or instructions are executed by the processor, the steps of the communication operation execution method according to any one of claims 1 to 15 are implemented.

26. A network-side device, comprising a processor and a memory, wherein the memory stores a program or instructions capable of running on the processor, and when the program or instructions are executed by the processor, the steps of the information receiving method according to any one of claims 16 to 20 are implemented.

27. A chip, wherein the chip comprises a processor and a communication interface, the communication interface is coupled to the processor, and the processor is configured to execute a program or instructions to implement the steps of the communication operation execution method according to any one of claims 1 to 15 or the steps of the information receiving method according to any one of claims 16 to 20.

28. A readable storage medium, wherein the readable storage medium stores a program or instructions, and when the program or instructions are executed by a processor, the steps of the communication operation execution method according to any one of claims 1 to 15 or the steps of the information receiving method according to any one of claims 16 to 20 are implemented.

29. A computer program product, wherein the computer program product is executed by at least one processor to implement the steps of the communication operation execution method according to any one of claims 1 to 15 or the steps of the information receiving method according to any one of claims 16 to 20.
